# EUROPEAN PATENT APPLICATION

(11) **EP 4 818 230 A1**
(43) Date of publication of application: **07.10.2026**
(21) Application number: 25167982.5
(22) Date of filing: 02.04.2025
(51) Int. Cl.: C08G 75/02, C08L 81/02, C09D 181/02, C09J 181/02

(54) **POLYTHIOETHER POLYMERS WITH ENHANCED CHEMICAL STABILITY**

(71) Applicant: BASF SE, 67056 Ludwigshafen am Rhein (DE); Albert-Ludwigs-Universität Freiburg, 79098 Freiburg (DE)
(72) Inventor: RUDOLF, Peter, 67056 Ludwigshafen am Rhein (DE); SCHAFFER, Andreas, 79111 Freiburg (DE); MOLAWI, Kian, 67056 Ludwigshafen am Rhein (DE); KONRADI, Rupert, 67056 Ludwigshafen am Rhein (DE); RUEHE, Juergen, 79110 Freiburg (DE)
(74) Representative: BASF IP Association

(57) **Abstract**

A curable composition comprising a polythiol prepolymer (B) having at least two groups of formula 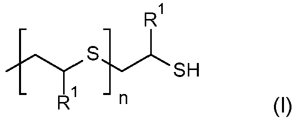 is provided, wherein n is 0 to 20, obtainable by using an oxathiolanone group-containing compound (A2), and a curing agent having an SH-reactive group. The oxathiolanone group-containing compound (A2) is used as a monomer for stabilizing a polythioether polymer (D) towards chemicals, preferably acids. The curable composition may be used upon hardening as a coating, as an adhesive, as a sealant or as a shaped article.

## Description

The present invention relates to a curable composition comprising a polythiol prepolymer (B), obtainable by using an oxathiolanone group-containing compound (A2), and a curing agent (C), to the polythiol prepolymer (B) and to the use of the oxathiolanone group-containing compound (A2) as a monomer for stabilizing a polythioether polymer (D) towards chemicals, preferably acids. The curable composition may be used upon hardening as a coating, an adhesive, a sealant or a shaped article.

### Background of the invention

Thiol-terminated, preferably oligomeric and polymeric, compounds, are valuable components for use in various industrial applications. Sulfur is usually present either as a polysulfide, for example as a disulfide, or as a thioether linkage, often combined with ether linkages or formal linkages. Such thiol-terminated (polymeric) compounds are known as polythioether or as polyether-thioether, resp..

Thiol-terminated compounds are mainly used in CASE applications, i.e., in coatings, sealants, adhesives and elastomers, as well as in optical applications.

A polythioether or a polyether-thioether may be prepared by condensation or addition polymerization. An acid-catalyzed condensation polymerization, for example, is described in EP 0243546 A1, wherein a liquid linear or branched thiol-terminated polythioether is obtained by reacting a compound having a primary mercaptan group and a compound having a secondary OH group located in β-position to a sulfur atom.

Another, more often used approach is the synthesis based on the so-called thiol-ene reaction.

US 6,509,418 B1 discloses a sealant formulation prepared from a thiol-terminated polymer based on a polythiol compound, like DMDO (1,8-dimercapto-3,6-dioxaoctane) or DMDS (dimercaptodiethylsulfide), and a polyvinyl ether monomer, like diethylene glycol divinyl ether, a curing agent and additives.

GB 1,515,188 A discloses a sealant composition comprising a thiol-terminated polythioether, prepared, for example, by photochemically initiated reaction of 1,3-propane dithiol and 1,2,4-trivinyl cyclohexane with methyl-acetylene.

C.-J. Zhang et al, J. Am. Chem. Soc. 2019, 141, 5490-5496, discloses the synthesis of a polythioether from a closed-system one-pot reaction of carbonyl sulfide and an epoxide in the presence of an organic base, wherein a cyclic thiocarbonate is generated as intermediates, followed by decarboxylative ring-opening.

US 4,163,832 discloses a polythioether formed by anionic ring opening of an episulfide with a mono-, di- or trithiol compound in the presence of a tertiary aliphatic amine to form the corresponding polythioether thiol.

US 3,326,977 discloses a reaction of ethylene thiocarbonate with a nucleophilic initiating agent, for example, NaOH, a thiol compound or an alcohol in combination with sodium to yield a polythioether with the corresponding end group derived from the nucleophilic initiating agent.

EP 0435306 A2 discloses an optical material based on 2,5-bis(2-mercaptoethylthiomethyl)-1,4-dithian which is prepared from 2,5-dimercaptomethyl-1,4-dithian by reaction with thiirane in benzene in the presence of benzyltrimethylammonium chloride.

WO 2020/216873 A1 discloses the reaction of a cyclic monothiocarbonate compound with a thiol compound under basic conditions and usually without an organic solvent to yield a polythioether.

Thiol-terminated sulfur-containing polymers such as polythioethers may be cured with suitable curing agents, like epoxy curing agents. For example, WO 2013/192297 A2 discloses a sealant composition based on a trifunctional sulfur-containing epoxy curing agent and a thiol-terminated polyether-thioether having an average thiol functionality of 2.05-2.95. The sealant is described as having an improved elongation.

WO 2014/164244 A1 discloses a radiation curable sealant composition based on a thiol terminated polyether-thioether having pendent hydroxy groups and triallylcyanurate. The cured polymer is described as having jet fuel resistance.

US 2016/0160080 A1 discloses a sealant composition based on Permapol P3.1E, an epoxy curing agent and an encapsulated DBU (1,8-diazabicyclo[5.4.0]undecane-7) as a latent amidine catalyst. The sealant composition is described as having an extended working time, compared to the use of DABCO.

Cured polymers based on thiol-terminated polythioether or polyether-thioether are, for example, used as aerospace sealants or as linings for fuel tanks, generally due to its fuel resistance, low glass temperature, desired elongation, etc..

However, further demanding performance requirements for applications like coatings, sealants, adhesives and elastomers, are usually properties like resistivity against various chemicals. Among them, an important requirement is the stability against acidic materials. In various industries acids, like HCl or organic acids, are used in cleaning agents, as a preservative for food and animal feed, as a silage aid, in textile dyeing and finishing, etc..

Thus, there is still a need for a chemically stable polythioether polymer based on a thiol-terminated prepolymer, which is selectively and easily available. The curable formulation including the thiol-terminated prepolymer should provide polythioether polymers having enhanced performance with respect to chemical stability, especially acid stability.

Therefore, it is an object of the present invention to provide a curable composition capable of preparing a polythioether polymer having enhanced chemical stability, especially enhanced acid stability.

A further object is to provide a polythiol prepolymer as a component in a curable composition for preparing a polythioether polymer having enhanced chemical stability, especially enhanced acid stability, upon curing.

A further object is to provide an oxathiolanone group-containing compound to be used as a stability enhancing monomer towards chemicals to provide chemically stable, preferably acid stable, polymers.

### Summary of the invention

It has now been found that a specific oxathiolanone group-containing compound may act as a reactive additive to modify the terminal SH groups of a polythiol monomer. A curable composition is available providing a polythioether polymer having enhanced chemical stability, especially enhanced acid stability.

Accordingly, in a first aspect the invention relates to a curable composition comprising a (i) a polythiol prepolymer (B) having at least two groups of formula 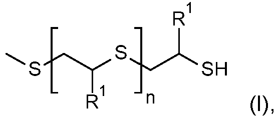 wherein n is 0 to 20, obtainable by a process, the process comprising: reacting a polythiol monomer (A1) of formula 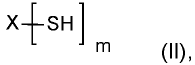 wherein m is 2, 3 or 4 and X is a m-valent linking group, and a compound (A2) of formula 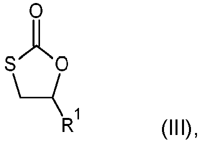 wherein

R¹ is hydrogen, C₁-C₁₈-alkyl or C₁-C₁₈-alkyl substituted with halogen or interrupted with O or S; and optionally a monomer (A3) having at least two SH-reactive groups, selected from an epoxy group, an isocyanate group, an ethylenically unsaturated group, a halogen group and any combination thereof,
and/or a monomer (A3') having at least one group containing a C≡C bond as an SH-reactive group;
and in case a monomer (A3) and/or a monomer (A3') is/are present, the reaction sequence is either
(i-1) a first step (i-1a) of reacting a polythiol monomer (A1) of formula (II) and a compound (A2) of formula (III), followed by a second step (i-1b) of reacting with a monomer (A3) and/or a monomer (A3'); or
(i-2) a first step (i-2a) of reacting a polythiol monomer (A1) of formula (II) and a monomer (A3) and/or a monomer (A3'), followed by a second step (i-2b) of reacting with a compound (A2) of formula (III);
   and
(ii) a curing agent (C) having at least two SH-reactive groups and/or a curing agent (C') having at least one group containing a C≡C bond as an SH-reactive group.

In a further aspect, the invention relates to an article containing a polythioether polymer (D), selected from a coating, an adhesive, a sealant and a shaped article, wherein the article is obtainable by applying the curable composition, as defined in any aspect herein, to a substrate and hardening the composition to form the polythioether polymer (D).

In a further aspect, the invention relates to a polythiol prepolymer (B) having at least two groups of formula 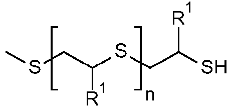 (I), wherein n is 0 to 20, obtainable by a process, the process comprising reacting a polythiol monomer (A1) of formula 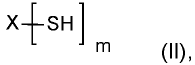 wherein m is 2, 3 or 4 and X is a m-valent linking group, and a compound (A2) of formula 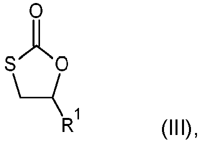 wherein
R¹ is hydrogen, C₁-C₁₈-alkyl or C₁-C₁₈-alkyl substituted with halogen or interrupted with O or S; and
a monomer (A3) having at least two SH-reactive groups, selected from an epoxy group, an isocyanate group, an ethylenically unsaturated group, a halogen group and any combination thereof,
and/or a monomer (A3') having at least one group containing a C≡C bond as an SH-reactive group;
and the reaction sequence is preferably either
(i-1) a first step (i-1a) of reacting a polythiol monomer (A1) of formula (II) and a compound (A2) of formula (III), followed by a second step (i-1b) of reacting with a monomer (A3) and/or a monomer (A3'); or
(i-2) a first step (i-2a) of reacting a polythiol monomer (A1) of formula (II) and a monomer (A3) and/or a monomer (A3'), followed by a second step (i-2b) of reacting with a compound (A2) of formula (III).

In a further aspect, the invention relates to the use of a compound (A2) of formula 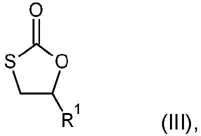 wherein
R¹ is hydrogen, C₁-C₁₈-alkyl or C₁-C₁₈-alkyl substituted with halogen or interrupted with O or S; as a monomer for stabilizing a polythioether polymer (D) towards chemicals, preferably acids, the polythioether polymer (D) is obtainable by a process comprising:
   a) preparing a polythiol prepolymer (B) having at least two groups of formula 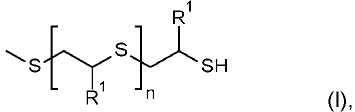 wherein n is 0 to 20, by reacting a polythiol monomer (A1) of formula 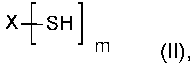 wherein m is 2, 3 or 4 and X is a m-valent linking group, and a compound (A2) of formula 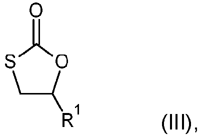 wherein
R¹ is hydrogen, C₁-C₁₈-alkyl or C₁-C₁₈-alkyl substituted with halogen or interrupted with O or S; and
optionally a monomer (A3) having at least two SH-reactive groups, selected from an epoxy group, an isocyanate group, an ethylenically unsaturated group, a halogen group and any combination thereof,
and/or a monomer (A3') having at least one group containing a C≡C bond as an SH-reactive group;
and in case a monomer (A3) and/or a monomer (A3') is/are present, the reaction sequence is either
(i-1) a first step (i-1a) of reacting a polythiol monomer (A1) of formula (II) and a compound (A2) of formula (III), followed by a second step (i-1b) of reacting with a monomer (A3) and/or a monomer (A3'); or
(i-2) a first step (i-2a) of reacting a polythiol monomer (A1) of formula (II) and a monomer (A3) and/or a monomer (A3'), followed by a second step (i-2b) of reacting with a compound (A2) of formula (III);
   and
b) hardening the polythiol prepolymer (B) with a curing agent (C) having at least two SH-reactive groups and/or a curing agent (C') having at least one group containing a C≡C bond as an SH-reactive group.

### Detailed description of the invention

The terms "alkyl", "alkylene", "alkoxy", "cycloalkyl", "cycloalkylene", "aryl", "halogen", etc. are known in the art and generally have the following meaning, if said groups are not further specified in specific embodiments mentioned below:
Alkyl, e.g., C₁-C₁₈-alkyl, C₁-C₁₂-alkyl or C₁-C₄-alkyl, may be within the given limits of carbon atoms linear or branched, where possible. Examples are methyl (Me), ethyl (Et), n-propyl, isopropyl, n-butyl, 1-methylpropyl, 2-methylpropyl, t-butyl, n-pentyl, 2-pentyl, 3-pentyl, 2,2-dimethylpropyl, n-hexyl, 1-methylhexyl, n-heptyl, 1,1,3,3-tetramethylbutyl, 1-methylheptyl, 3-methylheptyl, n-octyl, 2-ethylhexyl, n-nonyl, n-decyl, n-undecyl, n-dodecyl, n-tridecyl, n-tetradecyl, n-pentadecyl, n-hexadecyl, n-heptadecyl, n-octadecyl and constitutional isomers of the aforementioned n-alkyl radicals.
Alkoxy, e.g., C₁-C₄-alkoxy, is alkyl-O. Alkylthio, e.g., C₁-C₄-alkylthio, is alkyl-S.
Alkylene, e.g., C₁-C₁₈-alkylene, C₁-C₁₂-alkylene, C₁-C₆-alkylene or C₁-C₄-alkylene, may be derived from linear or branched alkyl, if possible, by abstracting a H atom from any terminal carbon atom of the alkyl.
Alkyleneoxy, e.g., C₁-C₁₈-alkyleneoxy or C₁-C₄-alkyleneoxy, is alkylene-O.
Cycloalkylene, e.g., C₅-C₈-cycloalkylene or C₅-C₆-cycloalkylene, includes cycloalkylene groups, which may be unsubstituted or substituted with alkyl groups, preferably unsubstituted. Examples are 1,2-cyclopentylene, 1,3-cyclopentylene, 1,2-cyclohexylene, 1,4-cyclohexylene or 1,2-cyclo-heptylene.
Arylene, e.g., C₆-C₁₂-arylene, may be derived from aryl, like phenyl, naphthyl or biphenylyl, by abstracting a hydrogen atom from any ring carbon atom. Examples are o-phenylene, m-phenylene, p-phenylene, 1,4-naphthylene, or 2,6-naphthylene or biphenyl-4,4'-diyl.
Aryleneoxy, e.g., C₆-C₁₂-aryleneoxy, is arylene-O. Arylenethio, e.g., C₆-C₁₂-arylenethio, is arylene-S.
Heteroarylene, e.g., C₂-C₅-heteroarylene, C₂-C₅-heteroarylene, may be derived from a triazinyl or triazinyl-based group, e.g., a group derived from isocyanuric acid.
Halogen (Hal) denotes I, Br, Cl, or F, preferably Cl on alkyl and Cl or Br on aryl.

The term "SH-reactive group", as used herein, means a group reactive towards an SH group.

The term "ethylenically unsaturated group", as used herein, means a non-aromatic ethylenically unsaturated group.

The term "vinylidene group", as used herein, means a group of formula >C=CH₂.

The term "a group having a non-activated C=C bond", as used herein, means a group which C=C bond is not part of a Michael system. A group having a non-activated C=C bond is preferably selected from a vinylene group, a vinylidene group, a vinyl group and an allyl group.

The term "substituted", as used herein, means "substituted one or more times with", that is 1 to 3 times, where possible, preferably 1 or 2 times, more preferably 1. If a substituent occurs more than once in a group, it may be different in each occurrence.

The term "oxathiolanone group", as used herein, means a 1,3-oxathiolane-2-one group, i.e., a group of formula (IV).

Unless otherwise stated, molecular weights of polymers refer herein to the weight-average molecular weight, measured by gel-permeation chromatography using a polystyrene standard.

The term "any combination thereof", as used herein, means a combination of two or more items thereof. The term "any mixture thereof", as used herein, means a mixture of two or more items thereof.

As used herein, the indefinite article "a" comprises the singular but also the plural, i.e., an indefinite article in respect to a constituent of a composition means that the constituent is a single constituent or a plurality of constituent. If not stated otherwise, the indefinite article "a" and the expression "at least one" are used synonymously.

The instant curable composition comprises a polythiol prepolymer (B) having at least two groups of formula (I) and a curing agent (C) and/or a curing agent (C') having an SH-reactive group. Upon hardening of both constituents, a polythioether polymer (D) is obtained.

The polythiol prepolymer (B) has at least two groups of formula 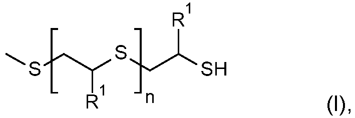 wherein n is 0 to 20, preferably n is 0 to 18, more preferably n is 0 to 10 or 0 to 5.

The polythiol prepolymer (B) is obtained by using a compound (A2) of formula 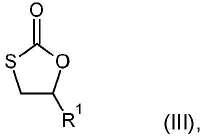 wherein R¹ is hydrogen, C₁-C₁₈-alkyl or C₁-C₁₈-alkyl substituted with halogen or interrupted with O or S.

The compound (A2) may also be designated herein as an oxathiolanone-group containing compound.

Preferred is a compound (A2) of formula (III), wherein R¹ is hydrogen, C₁-C₄-alkyl or C₁-C₁₂-alkyl interrupted with O or S.

More preferred is a compound (A2) of formula (III), wherein R¹ is hydrogen, C₁-C₄-alkyl or C₁-C₈-alkyl interrupted with O, especially hydrogen, C₁-C₄-alkyl or -CH₂-O-C₁-C₄-alkyl.

Accordingly, in a preferred aspect, the invention relates to a curable composition, wherein wherein R¹ is hydrogen, C₁-C₄-alkyl or C₁-C₁₂-alkyl interrupted with O or S.

Examples of a compound (A2) of formula (III) include compounds (A2) of formulae

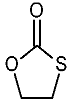

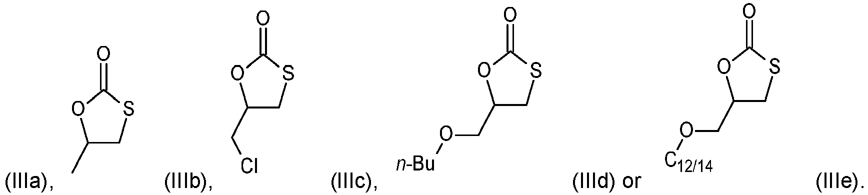

The substituent "C₁₂/C₁₄" means a substituent derived from C₁₂/C₁₄ fatty alcohol.

One or more compounds (A2) of formula (III) may be used in the process for preparing the polythiol prepolymer (B).

In one preferred embodiment, the compound (A2) is used as a single compound (A2) of formula (III).

In another preferred embodiment, a mixture of two different compounds (A2) of formula (III) is used. More preferred is a compound (A2), wherein a mixture of two different compounds (A2) is used, wherein the mixture comprises a compound of formula (Illa), a compound of formula (IIIb) or a compound of formula (Illd).

In another preferred embodiment, a mixture of a compound (A2) of formula (Illa) and a compound (A2) of formula (Illb) is used. More preferred is a compound (A2), wherein the compound (A2) of formula (Illb) is present in the mixture in an amount of more than 50 wt%, based on the total weight of the mixture of a compound (A2) of formula (Illa) and a compound (A2) of formula (Illb).

Especially preferred is a compound (A2), wherein precisely one compound (A1) of formula (III) is used.

The compounds (A2) of formula (III) may be prepared in accordance with processes described in US 3072676, US 3201416, WO 2019/034469 A1 or WO 2019/034468 A1.

In case R¹ is not hydrogen, the compound (A2) may also be used as a mixture with a compound (A2') of formula 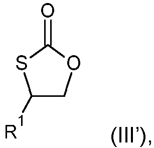 wherein R¹ is the same as in the compound (A2) of formula (III). The compound (A2') may be present in an amount of up to 3 wt%, based on the total weight of the compound (A3), preferably up to 2 wt%.

The polythiol monomer (A1) to be reacted with a compound (A2) is of formula 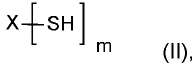 wherein m is 2, 3 or 4 and X is m-valent linking group, preferably m is 2 or 3.

The m-valent linking group is preferably a hydrocarbon group containing at least one group selected from an aliphatic saturated hydrocarbon group, a cycloaliphatic group, an aromatic group and a heteroaromatic group.

The m-valent linking group X may be a divalent linking group X¹. The divalent linking group X¹ may comprise an alkylene group, a cycloalkylene group, an arylene group and/or a heteroarylene group, and optionally at least one hetero-functional group selected from the group consisting of -O-, -S-, and -COO-.

Preferably, the divalent linking group X¹ of the polythiol monomer (A1) is a divalent linking group selected from C₁-C₁₈-alkylene; C₁-C₁₈-alkylene substituted with C₁-C₄-alkoxy, C₁-C₄-alkylthio or halogen, and/or interrupted with O, S, -COO-, C₅-C₈-cycloalkylene optionally interrupted with O or S, C₆-C₁₂-arylene, C₆-C₁₂-aryleneoxy, C₆-C₁₂-arylenethio, 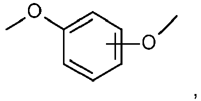 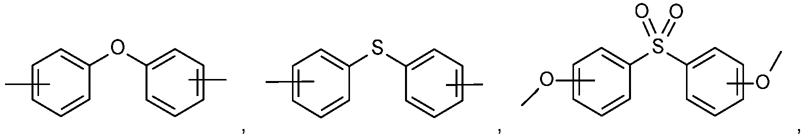 **or** C₂-C₅-heteroarylene;
C₅-C₈-cycloalkylene; C₅-C₈-cycloalkylene substituted with C₁-C₄-alkoxy, C₁-C₄-alkylthio or halogen, and/or interrupted with O or S;
C₆-C₁₂-arylene; C₆-C₁₂-arylene substituted with C₁-C₄-alkyl, C₁-C₄-alkoxy, C₁-C₄-alkylthio, halogen; and
C₂-C₅-heteroarylene; C₂-C₅-heteroarylene substituted with C₁-C₄-alkyl, C₁-C₄-alkoxy, C₁-C₄-alkylthio or halogen.

An example of interrupting C₆-C₁₂-arylene may be phenylene, like 1,4-phenylene, 1,3-phenylene or 1,2-phenylene.

An example of interrupting C₅-C₈-cycloalkylene may be cyclohexylene, like 1,4-cyclohexylene or 1,2-cyclohexylene.

An example of interrupting C₅-C₈-cycloalkylene interrupted with O or S, may be 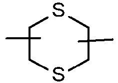 or 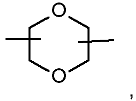 like

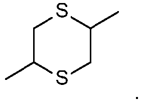

An example of interrupting C₆-C₁₂-aryleneoxy may be 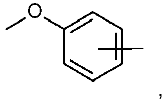 like

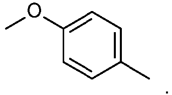

An example of interrupting C₆-C₁₂-arylenethio may be 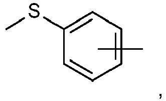 like

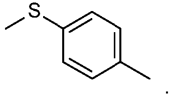

A suitable example of a C₂-C₅-heteroarylene may be

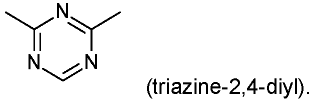

More preferably, the divalent linking group X¹ comprises at least one group selected from the group consisting of C₁-C₁₈-alkylene; C₁-C₁₈-alkylene interrupted with O, S, C₅-C₆-cycloalkylene, phenylene, triazine-2,4-diyl or 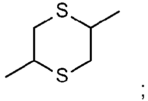 C₅-C₆-cycloalkylene; phenylene; 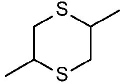 and triazine-2,4-diyl.

Preferred examples of a divalent group X¹ include C₁-C₁₈-alkylene, -(CH₂CH₂O)ₚ-CH₂CH₂-, -(CH₂CH₂S)ₚ-CH₂CH₂- with p being an integer of 1 to 10, preferably of 1 to 4, -(C₃H₇O)_{q}-C₃H₇-and -(C₃H₇S)_{q}-C₃H₇- with q being an integer of 1 to 10, preferably 1 to 4.

When m is 3, X² is a trivalent linking group, preferably derived from benzene (i.e., benzenetriyl), 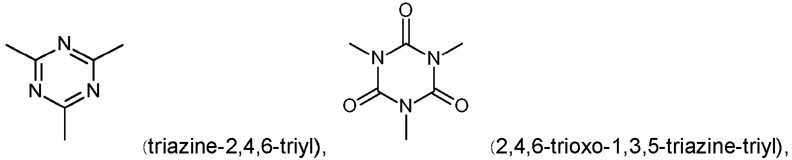 or a trivalent linking group composed of either benzenetriyl, triazinetriyl, 2,4,6-trioxo-1,3,5-triazinetriyl or methylidyne and a divalent linking group X^{1a} selected from C₁-C₁₈-alkylene, C₁-C₁₈-alkylene interrupted with O or S, and C₁-C₁₈-alkyleneoxy.

More preferably, X² is a trivalent linking group composed of benzenetriyl, triazine-2,4,6-triyl, 2,4,6-trioxo-1,3,5-triazine-triyl or methylidyne and a divalent linking group X^{1a} selected from C₁-C₁₂-alkylene, C₁-C₁₂-alkylene interrupted with O or S, and C₁-C₁₂-alkyleneoxy, more preferably selected from C₁-C₆-alkylene, C₁-C₁₂-alkylene interrupted with O or S, and C₁-C₄-alkyleneoxy.

Examples of a trivalent linking group are 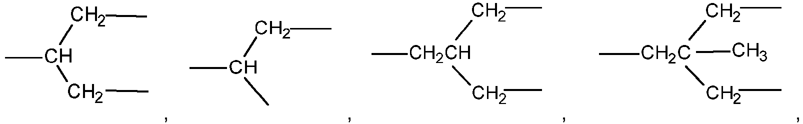 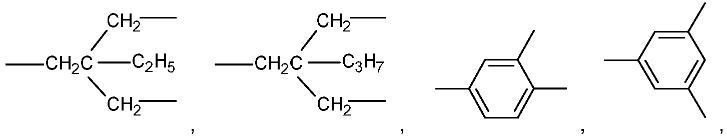 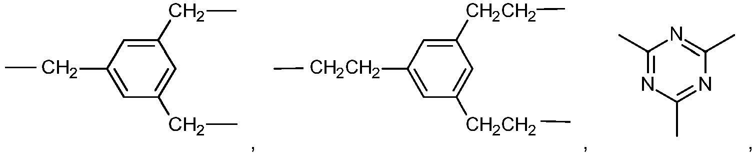 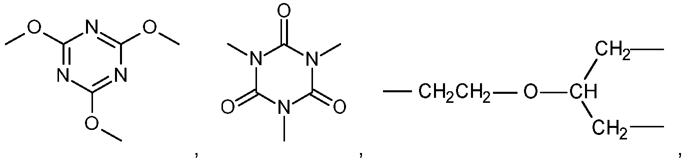 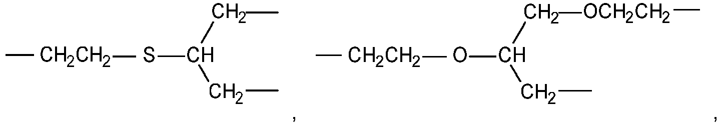 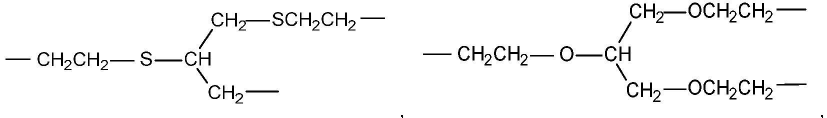 or

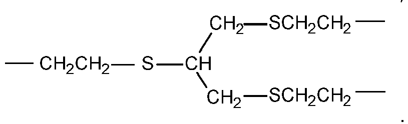

When m is 4, X³ is a tetravalent linking group, preferably composed of either a group derived from methane or benzene and a divalent organic group X^{1a}, selected from C₁-C₁₈-alkylene, C₁-C₁₈-alkylene interrupted with O or S, and C₁-C₁₈-alkyleneoxy. X^{1a} is preferably selected from C₁-C₁₂-alkylene, C₁-C₁₂-alkylene interrupted with O or S, and C₁-C₄-alkyleneoxy, more preferably selected from C₁-C₆-alkylene, C₁-C₁₂-alkylene interrupted with O or S, and C₁-C₄-alkyleneoxy.

Accordingly, in a preferred aspect, the invention relates to a curable composition, wherein the m-valent linking group X of the polythiol monomer (A1) is a divalent linking group X¹ selected from C₁-C₁₈-alkylene; C₁-C₁₈-alkylene substituted with C₁-C₄-alkoxy, C₁-C₄-alkylthio or halogen, and/or interrupted with O, S, -COO-, C₅-C₈-cycloalkylene optionally interrupted with O or S, C₆-C₁₂-arylene, C₆-C₁₂-aryleneoxy, C₆-C₁₂-arylenethio, 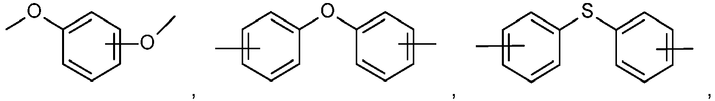 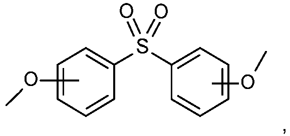 or C₂-C₅-heteroarylene;
C₅-C₈-cycloalkylene; C₅-C₈-cycloalkylene substituted with C₁-C₄-alkoxy, C₁-C₄-alkylthio or halogen, and/or interrupted with O or S;
C₆-C₁₂-arylene; C₆-C₁₂-arylene substituted with C₁-C₄-alkyl, C₁-C₄-alkoxy, C₁-C₄-alkylthio, halogen; and
C₂-C₅-heteroarylene; C₂-C₅-heteroarylene substituted with C₁-C₄-alkyl, C₁-C₄-alkoxy, C₁-C₄-alkylthio or halogen;
   or
a trivalent linking group X², wherein X² is selected from benzenetriyl, triazinetriyl, 2,4,6-trioxo-1,3,5-triazine-triyl and a trivalent linking group composed of either benzenetriyl, triazinetriyl, 2,4,6-trioxo-1,3,5-triazine-triyl or methylidyne and a divalent linking group X^{1a} ; or a tetravalent group X³, wherein X³ is a tetravalent linking group composed of either a group derived from methane or benzene and a divalent organic group X^{1a}; and the divalent organic group X^{1a} is selected from C₁-C₁₈-alkylene, C₁-C₁₈-alkylene interrupted with O or S, and C₁-C₁₈-alkyleneoxy.

In a further preferred aspect, the invention relates to a curable composition, wherein the m-valent linking group X of the polythiol monomer (A1) is
a divalent linking group X¹ selected from C₁-C₁₈-alkylene; C₁-C₁₈-alkylene interrupted with O, S, C₅-C₆-cycloalkylene, phenylene, triazine-2,4-diyl, or 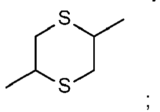 C₅-C₆-cycloalkylene; phenylene; 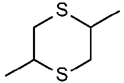 and triazine-2,4-diyl; or
a trivalent linking group X², wherein X² is a trivalent linking group composed of benzenetriyl, triazinetriyl, 2,4,6-trioxo-1,3,5-triazine-triyl or methylidyne and a divalent linking group X¹² selected from C₁-C₁₂-alkylene, C₁-C₁₂-alkylene interrupted with O or S, and C₁-C₄-alkyleneoxy.

Examples of polythiol monomers (A1) having two thiol groups include 1,2-dimercaptoethane, 1,3-dimercaptopropane, 1,4-dimercaptobutane, 1,6-dimercaptohexane, 1,2-cyclohexanedithiol, 1,4-cyclohexanedithiol, di(ethyleneglycol)dithiol, tri(ethyleneglycol)-dithiol, tetra(ethyleneglycol)-dithiol, 1,5-dimercapto-3-oxapentane, ethylene glycol bis(2-mercaptoacetate), diethylene glycol bis(2-mercaptoacetate), ethylene glycol bis(3-mercaptopropionate), diethylene glycol bis(3-mercaptopropionate), 1,4-bis(3-mercaptobutyroyloxy)butane, bis(2-mercaptoethyl)sulfide, bis(3-mercaptopropyl)sulfide, 1,2-bis(3-mercaptopropylthio)ethane, 2,5-dimercaptomethyl-1,4-dithiane, 2,5-dimercaptomethyl-2,5-dimethyl-1,4-dithiane, 2,5-dimercapto-1,4-dithiane, 4,6-bis(mercaptomethylthio)-1,3-dithiane, 2.5-bis(mercaptomethyl)-1-thiane, 2.5-bis(2-mercaptoethyl)-1-thiane, 3,6-dioxa-1,8-octane-dithiol, 3,6-dithia-1,8-octane-dithiol, 2,2-dimethylpropane-1,3-dithiol, 2,2-bis(4-mercaptomethylphenyl)propane, 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)-benzene, 1,3-bis(mercaptoethyl)benzene, 1,4-bis(mercaptoethyl)benzene, 2,5-toluenedithiol, 3,4-toluenedithiol, 1,5-naphthalenedithiol, 2,6-naphthalenedithiol; bis(4-mercaptomethylphenyl)-sulfide, bis(4-mercaptophenyl)sulfide, (1,1'-biphenyl)-4,4'dimethanethiol, bis(4-mercaptophenyl)-ether, bis(4-mercaptomethylphenyl)-ether and 2,2-bis(4-mercaptophenyl)-propane.

Examples of a polythiol monomer (A1) having 3 thiol groups include 1,2,3-trimercaptopropane, 2-(2-mercaptoethylthio)-1,3-dimercaptopropane, 1,2-bis(2-mercaptoethylthio)-3-mercaptopropane, 2-mercaptomethyl-1,3-dimercaptopropane, 2-mercaptomethyl-1,4-dimercaptobutane, trimethylolpropane-tris(2-mercaptoacetate), trimethylolpropane-tris(3-mercaptopropionate), trimethylolethane-tris(2-mercaptoacetate), trimethylolethane-tris(3-mercaptopropionate), 1,2,3-tris(2-mercaptoethylthio)propane, 1,2,3-tris(3-mercaptopropylthio)propane, tris(mercaptomethylthio)methane, tris(mercaptoethylthio)methane; 1,1,1-tris(mercaptomethyl)-propane, 4-mercaptomethyl-1,8-dimercapto-3,6-dithiaoctane, 1,2,9-trimercapto-4,6,8-trithianonane, 1,5-dimercapto-3-mercaptomethylthio-2,4-dithiapentane, 1,3,5-trimercaptobenzene, 1,3,5-tris(mercaptomethyl)benzene, 1,3,5-tris(mercaptoethyleneoxy)benzene, tris[2-(3-mercaptopropionyloxy)ethyl] isocyanurate, polycaprolactontetra(3-mercaptopropionate), ethoxylated trimethylolpropane-tri(3-mercaptopropionate), trithiocyanuric acid (TMT, 1,3,5-triazine-2,4,6-trithiol) and capcure^{®}-type trithiols.

Examples of a polythiol monomer (A1) having 4 thiol groups include tetrakis(mercaptomethyl-methane), pentaerythritol tetrakis(3-mercaptobutylate), pentaerythritol-tetrakismercaptoacetate, pentaerythritol-tetrakis(3-mercaptopropionate) and capcure^{®}-type tetrathiols.

Polythiol monomers (A1) which may be used in the practice of the invention are commercially available or may be prepared by methods generally known in the art, for example, by the isothiouronium salt process which comprises reacting the corresponding polyol or polyhalogeno compound with thiourea to form a thiouronium salt and hydrolyzing the salt, as described, for example, in R.L. Frank et al., J. Am. Chem. Soc., 1946, 68, 10, 2103-2104.

One-pot rapid synthesis of thiols from alcohols under mild conditions is generally possible by using triphenyl phosphine, N-bromo-succinimide (NBS) and polymer supported hydrosulfide, as described, for example, by B.P. Bandgar et al., Synlett 2000, 6, 908-910. The formation of dialkylsulfides does not occur under these conditions, yields around 85% are possible.

Polythiol monomers (A1) may also be obtained from alcohols in moderate yields (44%) with H₂S by using dicobalt octacarbonyl as a catalyst (CO, 60 bar, 150°C), as described, for example, by H. Alper et al, J. Org. Chem.1988, 53, 3306-3309.

The valence m is preferably 2 or 3, more preferably 2.

Preferably, the polythiol monomer (A1) is a dithiol monomer having -O- and -S- groups in the carbon backbone and optionally pendent alkyl groups like methyl groups.

Especially, the polythiol monomer (A1) is a dithiol monomer (A1) having only -S- groups in the aliphatic backbone and optionally pendent methyl groups.

The equivalent ratio of the SH groups of the polythiol monomer (A1) and the group of formula 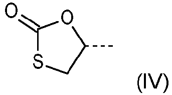 of compound (A2) may be of from 1 : 1 to 1 : 20, preferably 1 : 1 to 1: 18, more preferably 1 : 1 to 1 : 10 or 1 : 1 to 1 : 5.

Optionally, a monomer (A3) and/or a monomer (A3') having an SH-reactive group may be used to prepare the polythiol prepolymer (B).

If present, the optional monomer (A3) and/or monomer (A3') is usually used in a sub-stoichiometric amount. Thus, the equivalent ratio of SH groups of the polythiol monomer (A1) to the SH-reactive groups of the monomer (A3) and/or the monomer (A3') may be of from 1 : 0.01 to 1 : 0.99, more preferably from 1 : 0.1 to 1 : 0.9, especially 1 : 0.1 to 1 : 0.5, wherein one equivalent of an SH-reactive group of monomer (A3') corresponds to 0.5 equivalents of an SH-reactive group of monomer (A3).

The at least two SH-reactive groups of the monomer (A3) may be selected from an epoxy group, an isocyanate group, an ethylenically unsaturated group, a halogen group and any combination thereof.

The ethylenically unsaturated group may be a (meth)acryloyl group, a vinylene group, a vinylidene group, a vinyl group, an allyl group or any combination thereof.

Preferably, the at least two SH-reactive groups of the monomer (A3) may be selected from an epoxy group, an isocyanate group, a (meth)acryloyl group, a vinylene group, a vinylidene group, a vinyl group, an allyl group and any combination thereof.

More preferably, the at least two SH-reactive groups of the monomer (A3) may be selected from a vinylene group, a vinylidene group, a vinyl group, an allyl group and any combination thereof, especially selected from a vinyl group, an allyl group and any combination thereof, in particular selected from a vinyl ether group, an allyl ether group and any combination thereof.

The at least one SH-reactive group of the monomer (A3') may be a group containing a C≡C bond.

In case a monomer (A3) and/or a monomer (A3') is/are used to prepare the polythiol prepolymer (B), the reaction sequence may be either:
(i-1) a first step (i-1a) of reacting a polythiol monomer (A1) of formula (II) and a compound (A2) of formula (III), followed by a second step (i-1b) of reacting with a monomer (A3) and/or a monomer (A3'); or
(i-2) a first step (i-2a) of reacting a polythiol monomer (A1) of formula (II) and a monomer (A3) and/or a monomer (A3'), followed by a second step (i-2b) of reacting with a compound (A2) of formula (III).

The sequence (i-1) is usually a two-step process comprising a first step (i-1a) of reacting a polythiol monomer (A1) of formula (II) and a compound (A2) of formula (III) to form an intermediate compound (I-i-1a) having terminal SH groups, and a second step (i-1b) of reacting the intermediate compound (I-i-1a) with a monomer (A3) and/or a monomer (A3') to form the polythiol prepolymer (B).

The sequence (i-2) is usually a two-step process comprising a first step (i-2a) of reacting a polythiol monomer (A1) of formula (II) and a monomer (A3) and/or a monomer (A3') to form an intermediate compound (I-i-2a) having terminal SH groups, and a second step (i-2b) of reacting the intermediate compound (I-i-2a) with a compound (A2) of formula (III).

The monomer (A3) and the monomer (A3') may be compounds mentioned as the curing agent (C), as described herein-after.

In a further aspect, the invention relates to a polythiol prepolymer (B) having at least two groups of formula 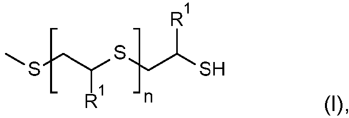 wherein n is 0 to 20, obtainable by a process, the process comprising reacting a polythiol monomer (A1) of formula 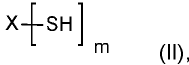 wherein m is 2, 3 or 4 and X is a m-valent linking group, and a compound (A2) of formula 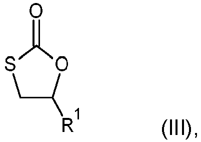 wherein
R¹ is hydrogen, C₁-C₁₈-alkyl or C₁-C₁₈-alkyl substituted with halogen or interrupted with O or S; and
a monomer (A3) having at least two SH-reactive groups, selected from an epoxy group, an isocyanate group, an ethylenically unsaturated group, a halogen group and any combination thereof,
and/or a monomer (A3') having at least one group containing a C≡C bond as an SH-reactive group;
wherein the reaction sequence is preferably either
   (i-1) a first step (i-1a) of reacting a polythiol monomer (A1) of formula (II) and a compound (A2) of formula (III), followed by a second step (i-1b) of reacting with a monomer (A3) and/or a monomer (A3'); or
   (i-2) a first step (i-2a) of reacting a polythiol monomer (A1) of formula (II) and a monomer (A3) and/or a monomer (A3'), followed by a second step (i-2b) of reacting with a compound (A2) of formula (III).
Preferred is a curable composition or a polythiol prepolymer (B), wherein
   (i) the polythiol prepolymer (B) has at least two groups of formula (I), wherein n is 0 to 20, obtainable by a process, the process comprising:
      reacting a polythiol monomer (A1) of formula (II), wherein m is 2 or 3, preferably m is 2, and X is a m-valent linking group,
      and a compound (A2) of formula (III), wherein
      R¹ is hydrogen, C₁-C₁₈-alkyl or C₁-C₁₈-alkyl substituted with halogen or interrupted with O or S, preferably hydrogen, C₁-C₄-alkyl or C₁-C₁₂-alkyl interrupted with O or S; and
      a monomer (A3) having at least two SH-reactive groups, selected from an epoxy group, an isocyanate group, an ethylenically unsaturated group, a halogen group and any combination thereof,
      and/or a monomer (A3') having at least one group containing a C≡C bond as an SH-reactive group;
      wherein the reaction sequence is either
      (i-1) a first step (i-1a) of reacting a polythiol monomer (A1) of formula (II) and a compound (A2) of formula (III), followed by a second step (i-1b) of reacting with a monomer (A3) and/or a monomer (A3'); or
      (i-2) a first step (i-2a) of reacting a polythiol monomer (A1) of formula (II) and a monomer (A3) and/or a monomer (A3'), followed by a second step (i-2b) of reacting with a compound (A2) of formula (III).

Further preferred is a curable composition or a polythiol prepolymer (B), wherein the m-valent linking group X of the polythiol monomer (A1) is a divalent linking group X¹ selected from C₁-C₁₈-alkylene, -(CH₂CH₂O)ₚ-CH₂CH₂-, -(CH₂CH₂S)ₚ-CH₂CH₂- with p being an integer of 1 to 10, - (C₃H₇O)_{q}-C₃H₇-, -(C₃H₇S)_{q}-C₃H₇- with q being an integer of 1 to 10;
R¹ is hydrogen, C₁-C₄-alkyl or C₁-C₁₂-alkyl interrupted with O or S; and
a monomer (A3) and/or a monomer (A3') is/are present, preferably a monomer (A3).

More preferred is a curable composition or a polythiol prepolymer (B), wherein the m-valent linking group X of the polythiol monomer (A1) is a divalent linking group X¹ selected from C₁-C₁₈-alkylene, -(CH₂CH₂S)ₚ-CH₂CH₂- with p being an integer of 1 to 4 and -(C₃H₇S)_{q}-C₃H₇- with q being an integer of 1 to 4;
R¹ is hydrogen, C₁-C₄-alkyl or C₁-C₁₂-alkyl interrupted with O or S; and
a monomer (A3) and/or a monomer (A3') is/are present, preferably a monomer (A3).

The polythiol monomer (B) obtainable by using a monomer (A3) and/or a monomer (A3') may be designated as a polythiol adduct. The relative amounts of SH groups of the polythiol monomer (A1) and the SH-reactive groups of the monomer (A3) and/or the monomer (A3') are chosen to yield adducts having terminal thiol groups.

The polythiol monomer (B) obtainable by using a monomer (A3) and/or a monomer (A3') may have an average functionality of from at least 2, preferably 2.05 to 3.

In case a monomer (A3) and/or a monomer (A3') is/are present, the equivalent ratio of the SH groups of the polythiol monomer (A1) and the group of formula 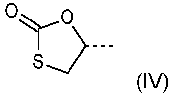 of compound (A2) may be of from 1 : 1 to 1 : 20, preferably 1 : 1 to 1: 18, more preferably 1 : 1 to 1 : 10.

Preferably, the equivalent ratio of the SH groups of the polythiol monomer (A1) to the SH-reactive groups of the monomer (A3) and/or the monomer (A3') is of from 1 : 0.01 to 1 : 0.99, more preferably from 1 : 0.1 to 1 : 0.9, especially 1 : 0.1 to 1 : 0.5, wherein one equivalent of an SH-reactive group of monomer (A3') corresponds to 0.5 equivalents of an SH-reactive group of monomer (A3).

In some preferred embodiments, the polythiol monomer (B) is obtainable by using a monomer (A3), wherein the at least two SH-reactive groups of the monomer (A3) are selected from an epoxy group, an isocyanate group, an ethylenically unsaturated group and any combination thereof.

Especially, the ethylenically unsaturated group is selected from a vinylene group, a vinylidene group, a vinyl group and an allyl group.

In a further preferred embodiment, the polythiol monomer (B) is obtainable by using a monomer (A3), wherein at least one monomer (A3) having two SH-reactive groups and at least one monomer (A3) having three SH-reactive groups are present, and wherein preferably the two SH-reactive groups of the monomer (A3) having two SH-reactive groups and the three SH-reactive groups of the monomer (A3) having three SH-reactive groups are an ethylenically unsaturated group.

In a further preferred embodiment, the polythiol monomer (B) is obtainable by using a monomer (A3), wherein one monomer (A3) having two SH-reactive groups and one monomer (A3) having three SH-reactive groups are present, and wherein preferably the two SH-reactive groups of the monomer (A3) having two SH-reactive groups and the three SH-reactive groups of the monomer (A3) having three SH-reactive groups are an ethylenically unsaturated group.

The at least one monomer (A3) having two SH-reactive groups is usually used in a molar excess to the at least one monomer (A3) having three SH-reactive groups.

The equivalent ratio of the monomer (A3) having two SH-reactive groups to the monomer (A3) having three SH-reactive groups may be of from 1 : 0.05 to 1 : 0.5.

The amount of a monomer (A3) having 3 or more SH-reactive groups in a polythiol prepolymer (B) may be of from 5 to 25 mol%, based on 100 mol% of all monomers, preferably of from 10 to 20 mol%.

More preferably, the at least two SH-reactive groups of the monomer (A3) are an ethylenically unsaturated group selected from a vinyl group, an allyl group, a vinylene group, vinylidene group or any combination thereof.

Preferably, the monomer (A3) is a compound mentioned as a curing agent (C3c) having at least two or three vinyl groups, allyl groups, vinylene groups or a combination of a vinylene and vinylidene group, for example as part of a bi- or a tricyclic compound, especially selected from a vinyl ether group, an allyl ether group and any combination thereof.

Preferred examples of a monomer (A3) include compounds having at least two vinyl or allyl groups, for example, 1,4-divinylbenzene, trivinylbenzene, divinylcyclohexane, trivinylcyclohexane like 1,2,4-trivinylcyclohexane, divinyl ethers such as divinyl ether, ethyleneglycol divinylether, diethylene glycol divinyl ether or triethyleneglycol divinyl ether, butanediol divinyl ether, hexanediol divinyl ether, cyclohexanedimethanol divinylether, polytetrahydrofuryl divinyl ether, trimethylolpropane trivinyl ether, pentaerythritol tetravinyl ether; divinyl sulfide; diallyl-orthophthalate, triallyl-isocyanurate and triallyl-cyanurate.

Preferred examples of a monomer (A3) include compounds having at least two vinylidene groups or vinylene groups or a combination thereof, for example, bicyclic or tricyclic compounds, like norbornadiene, 5-ethylidene-2-norbornene or dicyclopentadiene.

Preferred examples of a monomer (A3') include propargyl alcohol, ethers of propargyl alcohol, esters of propargyl alcohol or amides of propargylamine.

Further preferred is a curable composition or polythiol prepolymer (B), wherein m is 3-valent linking group X² and the monomer (A3) has two SH-reactive groups, selected from an epoxy group, an isocyanate group, an ethylenically unsaturated group, a halogen group and any combination thereof, preferably selected from an ethylenically unsaturated group, more preferably selected from a vinyl group and an allyl group.

Preferred examples of a polythiol monomer (A1) having 3 thiol groups include 1,2-bis(2-mercaptoethylthio)-3-mercaptopropane, trimethylolpropane-tris(3-mercaptopropionate), trimethylolethane-tris(2-mercaptoacetate), tris[2-(3-mercaptopropionyloxy)ethyl] isocyanurate, trithiocyanuric acid (TMT, 1,3,5-triazine-2,4,6-trithiol) and capcure^{®}-type trithiols.

In a further aspect, the invention relates to a process for preparing a polythiol prepolymer (B) having at least two groups of formula 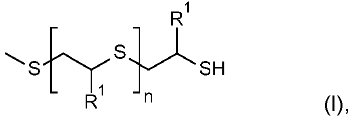 wherein n is 0 to 20, the process comprising: reacting a polythiol monomer (A1) of formula 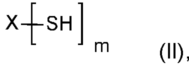 wherein m is 2, 3 or 4, preferably 2 or 3, and X is a m-valent linking group, and a compound (A2) of formula 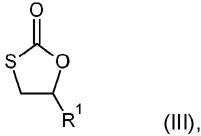 wherein
R¹ is hydrogen, C₁-C₁₈-alkyl or C₁-C₁₈-alkyl substituted with halogen or interrupted with O or S; and
a monomer (A3) having at least two SH-reactive groups, selected from an epoxy group, an isocyanate group, an ethylenically unsaturated group, a halogen group and any combination thereof,
and/or a monomer (A3') having at least one group containing a C≡C bond as an SH-reactive group;
wherein the reaction sequence is preferably either
(i-1) a first step (i-1a) of reacting a polythiol monomer (A1) of formula (II) and a compound (A2) of formula (III), followed by a second step (i-1b) of reacting with a monomer (A3) and/or a monomer (A3'); or
(i-2) a first step (i-2a) of reacting a polythiol monomer (A1) of formula (II) and a monomer (A3) and/or a monomer (A3'), followed by a second step (i-2b) of reacting with a compound (A2) of formula (III).

Preferably, the process for preparing a polythiol prepolymer (B) is carried out as a one-pot process.

The polythiol prepolymer (B) usually has predominately SH groups as terminal groups, usually > 80% of the terminal groups, preferably > 90%, more preferably > 95%.

In case the polythiol prepolymer (B) does not comprise a unit derived from a monomer (A3) or (A3'), the polythiol prepolymer (B) may comprise the following formula 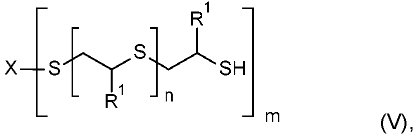 wherein X, R¹, n and m are as defined in any aspect herein.

The polythiol prepolymer (B) has usually a number average molecular weight (Mₙ) of from 250 to 10,000 g/mol, preferably up to 5,000 g/mol, more preferably up to 3,000 g/mol, as determined by gel-permeation chromatography using polystyrene as standard.

The polythiol prepolymer (B) comprising a unit derived from a monomer (A3) and/or (A3') usually has a number average molecular weight (Mₙ) of from 400 to 15,000 g/mol, preferably from 500 to 10,000 g/mol, more preferably from 600 to 7500 g/mol, especially from 600 to 5,000 g/mol, as determined by gel-permeation chromatography using polystyrene as standard.

The polythiol prepolymer (B) usually has an SH content of from 1 to 40 wt%, preferably from 1 to 35 wt%, more preferably from 1 to 20 wt%, based on the total weight of the polythiol prepolymer (B). The SH content is generally determined by iodometric titration.

The polythiol prepolymer (B) comprising a unit derived from a monomer (A3) and/or (A3') usually has an SH content of from 1 to 10 wt%, based on the total weight of the polythiol prepolymer (B), preferably from 1 to 8 wt%. The SH content is generally determined by iodometric titration.

Preferably, the polythiol prepolymer (B) has an atomic ratio of sulfur to oxygen of from 100 : 0 to 20 : 80.

Preferably, the polythiol prepolymer (B) is essentially free of hydrolysable groups, like ester groups, urethane groups, acetal groups or ketal groups, more preferably free of said hydrolysable groups.

The reaction step of a polythiol monomer (A1) and a compound (A2) of formula (III) may be carried out by adding the compound (A2) in an amount of about (n x m) equivalents, based on one equivalent of the polythiol monomer (A1) of formula (II).

The reaction may be conducted in the presence of a basic catalyst. Suitable catalysts are a tertiary amine catalyst, an amidine catalyst, a guanidine catalyst, a tertiary phosphine catalyst, a basic metal salt like a metal hydroxide, metal alkoxide from titanium or tin, for example, tetraalkylates or dialkyltin alkanoates, or a metal sulfide. The catalyst may be added before or during the reaction.

The reaction may be carried out at a temperature of from 20 to 250°C, preferably from 20 to 150°C. The reaction may be carried out with or without an organic solvent, like toluene, xylene, tetrahydrofurane, dimethyl-formamide. A solvent may be omitted if the polythiol monomer (A1) or the compound (A2) is liquid at the temperature of the reaction and may serve as a solvent for the other starting material.

The catalyst may be removed by suitable means, for example, by washing with water or an aqueous solution of acids, like HCl, to obtain the polythiol prepolymer (B).

The polythiol prepolymer (B) obtained may comprise a mixture of polythiol prepolymers (B) with different chain lengths, wherein the product based on the applied (n x m) amount is usually the main product. If desired, the main product may be purified by conventional methods, for example, by extraction. Preferably, the polythiol prepolymer (B) may be used without any purification.

Also, a mixture of more different compounds (A2) may be used, preferably a mixture of two or three compounds (A2), more preferably a mixture of two compounds (A2). In case of a mixture is used, the consumption of the reaction follows the sequence of adding the compounds (A2) resulting in block copolymers or other defined copolymers, dependent on the kind of addition.

In case a monomer (A3) and/or a monomer (A3') is/are present to prepare the polythiol prepolymer (B), the reaction sequence may be:
(i-1) a first step (i-1a) of reacting a polythiol monomer (A1) of formula (II) and a compound (A2) of formula (III) to form an intermediate compound (I-i-1a) having terminal SH groups, followed by a second step (i-1b) of reacting with a monomer (A3) and/or a monomer (A3').

The conditions of step (i-1a) usually correspond to the conditions for the reaction of a polythiol monomer (A1) and a compound (A2) of formula (III), as described herein-before.

The second step (i-1b) of reacting the intermediate (I-i-1a) with a monomer (A3) and/or a monomer (A3') may be carried out by combining the intermediate and the monomer (A3) and/or (A3'), followed by adding an appropriate catalyst and/or by effecting the reaction by irradiation with ultraviolet light either with or without a radical initiator/photosensitizer, dependent on the kind of the SH-reactive group of the monomer (A3) and/or (A3'). The reaction may be carried out at a temperature from 10-120°C, preferably 20 to 90°C for up to 24 hours.

Preferably, the monomer (A3) is a compound having at least two vinyl and/or allyl groups. A suitable catalyst or initiator for catalyzing or initiating the reaction of an SH group with a vinyl or allyl group is a compound that forms free radicals, e.g., azo compounds such as AIBN, organic peroxide compounds, redox pairs (H₂O₂, t-butyl peroxide, ascorbic acid) and also photoinitiators and oxygen itself. The reaction may take place in a free-radical process and may be initiated thermally with a radical initiator or photochemically with a photoinitiator.

The catalyst or initiator is generally used in an amount of from 0.01 to about 10 wt%, based on the total weight of the monomer (A3), preferably from 0.01 to 5 wt%.

Alternatively, the reaction sequence for preparing the polythiol prepolymer (B) may be:
(i-2) a first step (i-2a) of reacting a polythiol monomer (A1) of formula (II) and a monomer (A3) and/or a monomer (A3') to form an intermediate compound (I-i-2a) having terminal SH groups, followed by a second step (i-2b) of reacting with a compound (A2) of formula (III).

The conditions for each step usually correspond to the conditions, described herein-before.

Dependent on the kind of the SH-reactive groups of the monomer (A3) and/or (A3'), the appropriate catalyst may be selected accordingly. The catalysts are described herein-after for curing the polythiol prepolymer with the corresponding curing agents.

The polythiol prepolymer (B) obtained may comprise a mixture of polythiol prepolymers (B) with different chain lengths. If desired, the main product may be purified by conventional methods, for example, by extraction. Preferably, the polythiol prepolymer (B) may be used without any purification.

The curable composition comprises (i) a polythiol prepolymer (B) and (ii) a curing agent (C) and/or a curing agent (C') to yield upon hardening the polythioether polymer (D).

For hardening the curable composition, a curing agent (C) having at least two SH-reactive groups and/or a curing agent (C') having at least one group containing a C≡C bond as an SH-reactive group is used.

Preferably, the at least two SH-reactive groups of the curing agent (C) are selected from an epoxy group, an isocyanate group, an ethylenically unsaturated group, a halogen group and any combination thereof.

The curing agent (C) having at least two SH-reactive groups may be a polyepoxy curing agent (C1) having at least two epoxy groups, usually present as terminal groups. Preferably, the curing agent (C1) is aliphatic and/or aromatic.

The curing agent (C1) may include any mixture of two or more curing agents (C1).

The curing agent (C1) usually has 2 to 6 epoxy groups, preferably 2 to 5, more preferably 2 to 4, and, in particular, 2 or 3 epoxy groups. The epoxy equivalent weight (EEW) in typical components C1) is commonly in the range from 120 to 3000 g/equivalent. The epoxy equivalent weight gives the average mass of the of the curing agent (C1) in g per mole of epoxy group (according to DIN 16945).

The curing agent (C1) may comprise polyepoxides including polyepoxy resins. The curing agent C1) may be a glycidyl-based epoxy resin, for example, one prepared by etherification of an aromatic, aliphatic or cycloaliphatic polyol with epichlorohydrin. An epoxy resin of this kind is frequently also referred to as a polyglycidyl ether of an aromatic, an aliphatic or a cycloaliphatic polyol, respectively.

Examples of a polyepoxy curing agent (C1) are
- diglycidyl ethers of bisphenol A, bisphenol F or of bisphenol S;
- diglycidyl ethers of hydrogenated bisphenol A, hydrogenated bisphenol F, hydrogenated bisphenol S;
- glycidyl ethers of phenol- and cresol-based novolaks (novolaks are prepared by the acid-catalyzed condensation of formaldehyde and phenol or cresol; reacting the novolaks with epichlorohydrin produces the glycidyl ethers of the novolaks);
- ring hydrogenation products of polyglycidyl ethers based on novolaks, and mixtures thereof (compounds of this kind are typically prepared by selective hydrogenation of the aromatic rings in the afore-mentioned aromatic polyglycidyl ethers).
- diglycidyl ethers of aliphatic diols, for example diglycidyl ethers of polyalkoxylene diols;
- oligoglycidyl ethers of oligoalcohols, for example, trimethylolpropane triglycidyl ether;
- a hydantoin epoxy derivative, such as 1,3-diglycidyl-5-methyl-5-ethylhydantoin;
- a polyglycidyl ester of cycloaliphatic polycarboxylic acids, for example, diglycidyl hexahydrophthalate;
- tetraglycidyl methylenedianiline (TGMDA), triglycidyl p-aminophenol, and triglycidyl isocyanurate;
- epoxy resins obtainable by using compounds having at least two alcohol groups in excess with respect to epichlorohydrin; in epoxy resins of this kind, the degree of polymerization of the compound having at least two alcohol groups is preferably 2 to 25, in particular 2 to 10;
- epoxidized fatty acids, epoxidized fatty acid esters, and epoxidized fatty alcohols that in each case have at least two epoxy groups;
- a polyacrylate resin containing at least two epoxy groups; generally prepared by copolymerization of at least one ethylenically unsaturated monomer having at least one epoxy group, especially in the form of a glycidyl ether group (like glycidyl (meth)acrylate, allyl glycidyl ether and vinyl glycidyl ether), with at least one further ethylenically unsaturated monomer having no epoxy group (e.g., a C₁-C₂₀-alkyl ester of (meth)acrylic acid); the epoxy group-containing polyacrylate resin typically has an epoxy equivalent weight of 400 to 2500, preferably 500 to 1500, more preferably 600 to 1200; the number-average molecular weight (determined by gel permeation chromatography using a polystyrene standard) is typically of from 1000 to 15 000, preferably from 1200 to 7000, more preferably from 1500 to 5000; the glass transition temperature (T_{G}) is typically in the range from 30 to 80°C, preferably from 40 to 70°C, more preferably from 50 to 70°C (measured by means of differential calorimetry (DSC)).
- an epoxy-terminated polythioether or polythioethersulfide and/or an epoxidized polysulfide;
- non-glycidyl ether epoxy resins, such compounds, including oligomers and polymers, which have at least two epoxidized cycloaliphatic groups, more particularly 7-oxabicyclo-[4.1.0]-heptyl groups, which are obtainable by epoxidation of compounds having cyclohexenyl groups, for example, 4-epoxyethyl-1,2-epoxycyclohexane and 3,4-epoxycyclohexylmethyl-3',4'-epoxycyclohexane carboxylate.

Examples of suitable polyepoxy curing agents (C1) include products commercially available as DEN (DOW), DER (DOW), ARALDITE (Huntsman) or EPILOX (Leuna).

The curing agent (C1) may be a liquid resin, a solid resin or a mixture thereof. A liquid resin usually differs from a solid resin in lower viscosity. Moreover, a liquid resin generally has a higher proportion of epoxy groups and, accordingly, a lower epoxy equivalent weight. Preferably, the curing agent (C1) is a liquid resin at room temperature (25°C).

The amount of epoxy groups in a typical liquid resin is commonly in the range from 120 to 200 g/equivalent, and that of the solid resins is in the region of 450-3000 g/equivalent.

The viscosity of the liquid resin at 25°C is typically of from 1 to 20 Pa·s, preferably from 5 to 15 Pa·s. The viscosity of the solid resin at 25°C is typically of from 5 to 40 Pa·s range, preferably from 20 to 40 Pa·s. The viscosities reported here are the values determined in accordance with DIN 53015 at 25°C, as 40% strength solutions of the resins in methyl ethyl ketone.

The curing agent (C1) may be low-molecular-weight compounds generally having a number average molecular weight (Mₙ) smaller than 1000 g/mol or may be relatively high-molecular weight compounds (polymers). The polymeric curing agent (C1) preferably has a degree of oligomerization of from 2 to 25 units, more preferably from 2 to 10 units.

Curing agent (C1) may additionally contain reactive diluents in order to adjust the viscosity and flexibility, for example. Examples of reactive diluents include 1,4-butanediol diglycidyl ether, 2-ethylhexyl-glycidyl ether, 1,1,1-trimethylolpropane-triglycidylether and 1,6-hexanediol diglycidyl ether.

Preferably, the epoxy (epoxide) equivalent weight of curing agent (C1) is of from 140 to 700 g/eq, more preferably from 170 to 400 g/eq.

Preferred curing agents (C1) are curing agents (C1) based on bisphenol A epoxy resins having an epoxy equivalent weight in the range from 170 to 200 g/eq, based on bisphenol F resin having an epoxy equivalent weight in the range from 150 to 180 g/eq and based on epoxy novolac resins having an epoxy equivalent weight in the range from 160 to 220 g/eq.

The curing agent (C1) comprises preferably a polyglycidyl ether of an aromatic, an aliphatic or a cycloaliphatic polyol.

The curing agent (C) having at least two SH-reactive groups may be a curing agent (C2) having at least two N=C=O groups.

The polyisocyanate curing agent (C2) may be an aliphatic, alicyclic or aromatic polyisocyanate.

Preferably, the NCO functionality of the polyisocyanate is in the range of from 1.8 to 10, more preferably in the range of 1.9 to 4, most preferably in the range of 1.9 to 2.5.

The polyisocyanate (C2) may be an aliphatic, alicyclic or aromatic polyisocyanate.

Aromatic polyisocyanates are polyisocyanates, wherein at least one NCO group is directly attached to an aromatic ring. Alicyclic polyisocyanates comprise at least one alicyclic ring and each NCO group is not directly attached to an aromatic ring. Aliphatic polyisocyanates do not comprise an alicyclic ring and each NCO group is not directly attached to an aromatic ring. Preferred aliphatic and alicyclic polyisocyanates do not comprise aromatic rings.

The NCO groups of the polyisocyanate may be blocked or, preferably, unblocked.

The polyisocyanate may be a monomeric polyisocyanate or a polymeric polyisocyanate.

Examples of a monomeric aliphatic polyisocyanate having two NCO groups include tetramethylene-1,4-diisocyanate, pentamethylene-1,5-diisocyanate, hexamethylene-1,6-diisocyanate (HDI), octamethylene-1,8-diisocyanate, decamethylene-1,10-diisocyanate, dodecamethylene-1,12-diisocyanate, tetradecamethylene-1,14-diisocyanate, 2,2'-dimethyl-pentane diisocyanate, methyl-2,6-diisocyanatohexanoate, ethyl-2,6-diisocyanato-hexanoate, 2,2,4-trimethyl-1,6-hexamethylene diisocyanate (TMDI), 2,4,4-trimethylhexa-methylene diisocyanate, m-xylylene diisocyanate, p-xylylene diisocyanate, a, a, a', a'-tetramethyl xylylene diisocyanate, bis(isocyanatoethyl)benzene, bis(isocyanatopropyl)benzene, L-lysine diisocyanato methyl ester, L-lysine diisocyanato ethyl ester, or bis(isocyanatomethyl) naphthalene.

Examples of a monomeric alicyclic polyisocyanate having two NCO groups include 1,4-diisocyanatocyclohexane, 1,3-diisocyanatocyclohexane, 1,2-diisocyanatocyclohexane, 4,4'-di(isocyanatocyclohexyl)methane, 2,4'-di(isocyanatocyclohexyl)methane, 1-isocyanato-3,3,5-trimethyl-5-(isocyanatomethyl)cyclohexane (isophorone diisocyanate), 1,3-bis(isocyanatomethyl)cyclohexane, 1,4-bis(isocyanatomethyl)cyclohexane, 2,4-diisocyanato-1-methylcyclohexane, 2,6-diisocyanato-1-methylcyclohexane and 3(or 4),8(or 9)-bis (isocyanatomethyl)-tricyclo[5.2.1.0(2,6)]decane.

Examples of a monomeric aromatic polyisocyanate having two NCO groups include 2,4-tolylene diisocyanate, 2,6-tolylene diisocyanate, 2,4'-diisocyanatodiphenylmethane, 4,4'-diisocyanatodiphenylmethane, 1,3-phenylene-diisocyanate,1,4-phenylene diisocyanate, 1-chloro-2,4-phenylene diisocyanate, 3,3'-dichlorodiphenyl-4,4'-diisocyanate, 2,2',5,5'-tetrachlorodiphenyl-4,4'-diisocyanate, 1,5-naphthylene diisocyanate, diphenylene 4,4'-diisocyanate, 4,4'-diisocyanato-3,3'-dimethylbiphenyl, 3-methyldiphenylmethane 4,4'-diisocyanate, diphenyl ether 4,4'-diisocyanate, furan-2,5-diisocyanate,

Examples of a monomeric aliphatic polyisocyanate having at least three NCO groups include 1,3,6-hexamethylene triisocyanate, 1,4,8-triisocyanato-nonane, 2'-isocyanatoethyl 2,6-diiso-cyanatohexanoate, lysine triisocyanate, mesitylene triisocyanate.

Examples of a monomeric aromatic polyisocyanate having at least three NCO groups include 2,4,6-triisocyanatotoluene, triphenylmethane triisocyanate and 2,4,4'-triisocyanatodiphenyl ether.

Monomeric polyisocyanates may be prepared by methods known in the art, for example, by treating the corresponding amines with phosgene.

The polymeric polyisocyanate usually comprises at least one unit derived from a monomeric polyisocyanate.

The polymeric polyisocyanate preferably comprises (i) at least one unit independently derived from the group consisting of a monomeric aliphatic, an alicylic and an aromatic polyisocyanate, and (ii) at least one structural unit selected from the group consisting of uretdione, isocyanurate, biuret, urea, carbodiimide, uretonimine, urethane, allophanate, oxadiazinetrione and iminooxadiazinedione.

The NCO content of polymeric polyisocyanates is usually in the range of 5 to 40% (weight NCO groups based on the weight of the polymeric polyisocyanate).

The polyisocyanate is preferably an aliphatic polyisocyanate.

The curing agent (C) having at least two ethylenically unsaturated groups may be a curing agent (C3), for example a curing agent having activated C=C bonds, like a Michael system, or non-activated C=C bonds. An ethylenically unsaturated group containing an activated C=C bond may be a (meth)acryloyl group or a group derived from maleic acid, itaconic acid or fumaric acid.

The curing agent (C) having at least two SH-reactive groups may be a curing agent (C3a) having at least two (meth)acryloyl groups, usually present as terminal groups.

The curing agent (C3a) may have a molecular weight of up to 100,000 g/mol. In the case of polymers, this is the weight-average molecular weight, measured by gel-permeation chromatography using a polystyrene standard. The curing agent (C3a) preferably has a molecular weight of up to 1000 g/mol.

The curing agent (C3a) preferably has 2 to 4, especially two or three SH-reactive groups.

Examples of curing agents (C3a) having at least two (meth)acryloyl groups are:
- (meth)acrylic esters of polyfunctional alcohols or of alkoxylated, especially ethoxylated or propoxylated, polyfunctional alcohols; examples of polyfunctional alcohols are bifunctional alcohols, such as ethylene glycol, diethylene glycol, triethylene glycol, propylene glycol, dipropylene glycol, tripropylene glycol, 1,4-butanediol, 1,5-pentanediol, 1,6-hexanediol, neopentyl glycol, 1,7-heptanediol, 1,8-octanediol, 1,9-nonanediol, 1,10-decandiol, alkoxylated phenols, such as ethoxylated or propoxylated bisphenols, 1,2- or 1,4-cyclohexanedimethanol, isosorbide, tricyclodecanedimethanol, 2,2,4,4-tetramethyl-1,3-cyclobutanediol; trifunctional and higher functional alcohols are, for example, glycerol, trimethylolpropane, butanetriol, trimethylolethane, pentaerythritol, ditrimethylolpropane, dipentaerythritol, sorbitol, mannitol and the corresponding alkoxylated, especially ethoxylated and/or propoxylated alcohols;
- (meth)acrylic esters of polyesterols; suitable polyesterols are, for example, ones that may be prepared by esterifying polycarboxylic acids, preferably dicarboxylic acids, with polyols, preferably with diols; preferred dicarboxylic acids are succinic acid, glutaric acid, adipic acid, sebacic acid, and orthophthalic acid and the isomers and hydrogenation products thereof, and also the esterifiable or transesterifiable derivatives of said acids, for example the anhydrides and alkyl esters thereof; also suitable as dicarboxylic acids are maleic acid, fumaric acid, and tetrahydrophthalic acid or their anhydrides; preferred polyols are ethylene glycol, 1,2- and 1,3-propylene glycol, butane-1,4-diol, hexane-1,6-diol, neopentyl glycol, cyclohexanedimethanol, and polyglycols of ethylene glycol and/or propylene glycol;
- epoxy (meth)acrylates, for example, those that may be prepared by reacting epoxidized olefins or poly-, mono- or diglycidyl ethers such as bisphenol A diglycidyl ether with (meth)acrylic acid;
- urethane (meth)acrylates, such as the reaction products of hydroxyalkyl (meth)acrylates with poly- or diisocyanates;
- (meth)acrylamides like 1,3-bis-(meth)acryloyl-piperazine.

Preferred examples of curing agents (C3a) having at least two (meth)acryloyl groups are: Ethyleneglycol-di(meth)acrylate, polyethyleneglycol-di(meth)acrylate, 1,6-hexanediol-di(meth)acrylate, 1,4-butanediol-di(meth)acrylate, Bisphenol-A-glycerolate-di(meth)acrylate, trimethylolpropane-tri(meth)acrylate, glycerol-tri(meth)acrylate, or tris(2-hydroxyethyl)-isocyanurate-tri(meth)acrylate.

The curing agent (C) having at least two SH-reactive groups may be a curing agent (C3b) having at least two groups derived from maleic acid, itaconic acid or fumaric acid.

The curing agent (C3b) may have a molecular weight of up to 100,000 g/mol. In the case of polymers, this is the weight-average molecular weight, measured by gel-permeation chromatography using a polystyrene standard.

The curing agent (C3b) preferably has 2 or 3 SH-reactive groups.

Examples include unsaturated polyesters containing C=C bonds from maleic acid, itaconic acid or fumaric acid units, or bismaleimides like 1,2-bis(maleimido)ethane or 1,4-bis(maleimido)-butane.

The curing agent (C) having at least two SH-reactive groups may be a curing agent (C3c) having at least two non-activated C=C bonds, preferably selected from a vinylene group, a vinylidene group, a vinyl group, an allyl group, and any combination thereof.

The curing agent (C3c) may have a molecular weight of up to 100,000 g/mol. In the case of polymers, this is the weight-average molecular weight, measured by gel-permeation chromatography using a polystyrene standard. The curing agent (C3c) preferably has a molecular weight of up to 1000 g/mol, more preferably up to 500 g/mol.

The curing agent (C3c) preferably has 2 to 4, especially two or three SH-reactive groups.

Examples of curing agents (C3c) having at least non-activated C=C bonds are:
- compounds having at least two groups selected from a vinylene group, a vinylidene group and any combination thereof, for example, cyclooctadiene, cyclododecatriene, isoprene, limonene, norbornadiene, 5-ethylidene-2-norbornene, dicyclopentadiene, polybutadiene or polyisoprene;
- compounds having at least two vinyl or allyl groups, for example, 1,4-divinylbenzene, trivinylbenzene, divinylcyclohexane, trivinylcyclohexane like 1,2,4-trivinylcyclohexane, divinyl ethers such as divinyl ether, ethyleneglycol divinylether, diethylene glycol divinyl ether or triethyleneglycol divinyl ether, butanediol divinyl ether, hexanediol divinyl ether, cyclohexanedimethanol divinylether, polytetrahydrofuryl divinyl ether, trimethylolpropane trivinyl ether, pentaerythritol tetravinyl ether; divinyl sulfide; diallyl-orthophthalate, triallyl-isocyanurate, or triallyl-cyanurate.

The curing agent (C) having at least two SH-reactive groups may be a curing agent (C4) having at least two halogen groups, usually present as terminal groups. A curing agent (C4) undergoes usually a nucleophilic substitution reaction with the group -SH. A curing agent (C4) is preferably an organic dihalide, in particular an organic dichloride.

Examples are C₂-C₁₈-alkylene-dichlorides, C₂-C₁₈-alkylene dibromides, 1,11-dichloro-3,6,9-trioxaundecane, 1,11-dichloro-3,6,9-trithiaundecane, dichloromethyl-1,11-dichloro-3,6,9-trioxaundecane, 1,11-dibromo-3,6,9-trithiaundecane, bis(2,3-dichloropropyl)ether, bis(2,3-dichloropropyl)sulfide, 2,5-bis(chloromethyl)-1,4-dithiane, 2,5-bis(bromomethyl)-1,4-dithiane, 1,1,1-tris(chloromethyl)propane, 1,1,1-tris(bromomethyl)propane, 1,2-bis(2-chloroethylthio)-3-chloropropane, 1,2-bis(2-chloroethyloxy)-3-chloropropane, 1,2-bis(2-bromoethylthio)-3-bromopropane, 1,2-bis(2-bromoethyloxy)-3-bromopropane, 1,3-bis(2-chloroethylthio)-2-chloropropane, 1,3-bis(2-chloroethyloxy)-2-chloropropane, 1,3-bis(2-bromoethylthio)-2-bromopropane, 1,3-bis(2-bromoethyloxy)-2-bromopropane, and cyanuric chloride.

The curing agent (C') has at least one C≡C bond-containing group as an SH-reactive group, usually present as terminal group.

A C≡C bond-containing group may react twice with SH groups. An SH group may first add to a C≡C bond, converting the C≡C bond into a C=C bond. The C=C bond formed may react with a further SH group. A C≡C bond-containing group is therefore equivalent to two ethylenically unsaturated groups.

Examples of a curing agent (C') containing a C≡C bond-containing group include propargyl alcohol, ethers of propargyl alcohol, esters of propargyl alcohol and amides of propargylamine.

A curing agent (C) may also be a curing agent (C5) having different SH-reactive groups, for example, glycidyl (meth)acrylate.

Preferably, the at least two SH-reactive groups of the curing agent (C) are the same.

Accordingly, in a preferred aspect, the invention relates to a curable composition, wherein the at least two SH-reactive groups of the curing agent (C) are selected from an epoxy group, an isocyanate group, an ethylenically unsaturated group, a halogen group and any combination thereof.

Further preferred is a curable composition, wherein the at least two SH-reactive groups of the monomer (A3) are selected from a vinyl, an allyl group and any combination thereof, and the at least two SH-reactive groups of the curing agent (C) are selected from an epoxy group, an isocyanate group, an ethylenically unsaturated group and any combination thereof.

Usually, the polythiol prepolymer (B) and the curing agent (C) are used in an approximately stoichiometric ratio in terms of SH groups and SH-reactive groups. Preferably, the molar ratio of SH groups of polythiol prepolymer (B) to SH-reactive groups of curing agent (C) is of from 1 : 0.8 to 0.8 : 1, especially from 1 : 0.85 to 0.85 : 1.

Usually, the polythiol monomer (A1) and the curing agent (C) are used in an approximately stoichiometric ratio in terms of SH groups and SH-reactive groups. Preferably, the molar ratio of SH groups of polythiol prepolymer (B) to SH-reactive groups of curing agent (C) is of from 1 : 0.8 to 0.8 : 1, especially from 1 : 0.85 to 0.85 : 1.

Usually, the polythiol prepolymer (B) and the curing agent (C') are used in an approximately stoichiometric ratio in terms of SH groups and SH-reactive groups. Preferably, the ratio of SH groups of polythiol prepolymer (B) to SH-reactive groups of curing agent (C') is of from 1 : 0.4 to 0.8 : 0.5, especially from 1 : 0.43 to 0.67 : 1.

The polythiol prepolymer (B) and the curing agent (C) are usually formulated as a curable composition. The curable composition may be formulated as a one-component (1K) or a two-component (2K) formulation, preferably as a two-component (2K) formulation. A two-component formulation comprises generally as a first component a polythiol prepolymer component and as a second component a hardener component.

Accordingly, in a preferred aspect, the invention relates to a curable composition, wherein the curable composition is a two-component (2K) formulation comprising
(I) a first component containing (i) the polythiol prepolymer (B), and
(II) a second component containing (ii) the curing agent (C) having at least two SH-reactive groups and/or a curing agent (C') having at least one group containing a C≡C bond as an SH-reactive group.

A one-component formulation may be formulated, in case the polythiol prepolymer may comprise capped functional groups. Capping may be carried out by introducing suitable silicon-functional groups, wherein the silicon-functional group is an alkoxysilane group of formula

-SiR^{1s}R^{2s}R^{3s} (VI),

wherein two or three of the groups R^{1s} to R^{3s} are an alkoxy group, and the remaining group R^{1s} to R^{3s} is C₁-C₄-alkyl, preferably methyl.

The thiol groups of the polythiol prepolymer may be capped by reaction with a compound CAP having a silicon-functional group of formula (VI) and an SH-reactive group, preferably selected from a halogen group, a (meth)acryloyl group or an epoxy group.

Examples of a compound CAP include 3-(dimethoxymethylsilyl)propyl-chloride, 3-(trimethoxysilyl)propyl-chloride, 3-(dimethoxymethylsilyl)propyl methacrylate and 3-(trimethoxysilyl)propyl methacrylate.

A trimethoxysilylpropyl glycidylether is also suitable, when the polythiol prepolymer, upon reaction with said compound, or the composition comprising said reacted polythiol prepolymer is compatible with the silicon-functional groups, i.e., stable under anhydrous conditions.

The reaction with the compound CAP may usually be performed under exclusion of water, optionally using a base. To avoid any humidity the reaction may be performed under inert gas. The obtained capped prepolymer (B-CAP) comprises silicon-functional groups that are still curable by water, notably humidity.

The prepolymer (B-CAP) comprising curable silicon-functional groups may be cured, wherein the silicon-functional groups cross-link with each other in the presence of any ambient water, for example, humidity or water supplied. Usually, the normal humidity is sufficient to final get a fully cross-linked polymer. The cross-linking process may be accelerated by providing further water. For example, water may be added to the prepolymer (B-CAP) shortly before starting the curing step. Curing may be performed with a silanol condensation catalyst, for example, in an amount of from 0.005 to 5 wt%, based on the total weight of the prepolymer (B-CAP) to be cured, preferably of from 0.1 to 2 wt%. The catalyst may be added during or after the preparation of the prepolymers. Alternatively preferred is that no silanol condensation catalyst is present.

Examples of silanol condensation catalysts include organotin compounds such as tin(II)-2-ethylhexanoate, dioctyltin dilaureate, dibutyltin dilaureate, dibutyltin maleate or dibutyltin diacetate.

Thus, a one-component (1K) formulation is usually cured without a curing agent (C).

Accordingly, in a further aspect, the invention relates to a curable one-component (1K) composition comprising a
(i) a polythiol prepolymer (B-CAP) having at least two groups of formula 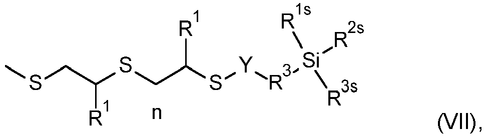 wherein n is 0 to 20,
   Y is a direct bond, -CH₂-CHOH-, -CH₂-CH₂-C(=O)-O- or -CH₂-CHCH₃-C(=O)-O-, obtainable by a process, the process comprising:
   (i-a) reacting a polythiol monomer (A1) of formula 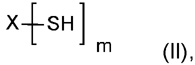
      wherein m is 2, 3 or 4 and X is a m-valent linking group, and a compound (A2) of formula 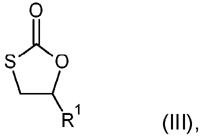 wherein
      R¹ is hydrogen, C₁-C₁₈-alkyl or C₁-C₁₈-alkyl substituted with halogen or interrupted with O or S; and
      optionally a monomer (A3) having at least two SH-reactive groups, selected from an epoxy group, an isocyanate group, an ethylenically unsaturated group, a halogen group and any combination thereof,
      and/or a monomer (A3') having at least one group containing a C≡C bond as an SH-reactive group;
      and in case a monomer (A3) and/or a monomer (A3') is/are present, the reaction sequence is either
      (i-1) a first step (i-1a) of reacting a polythiol monomer (A1) of formula (II) and a compound (A2) of formula (III), followed by a second step (i-1b) of reacting with a monomer (A3) and/or a monomer (A3'); or
      (i-2) a first step (i-2a) of reacting a polythiol monomer (A1) of formula (II) and a monomer (A3) and/or a monomer (A3'), followed by a second step (i-2b) of reacting with a compound (A2) of formula (III);
      to form a polythiol prepolymer (B) of formula 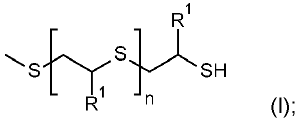 and
   (i-b) reacting the polythiol prepolymer of formula (I) with a compound CAP of formula

      Y' - R³ - SiR^{1s}R^{2s}R^{3s} (VIII)
   wherein two or three of the groups R^{1s} to R^{3s} are an alkoxy group, and the remaining group R^{1s} to R^{3s} is C₁-C₄-alkyl,
   Y' is halogen, preferably Cl, an epoxy group or a (meth)acryloyl group, and
   R³ is a C₁-C₆-alkylene group, preferably a C₁-C₄-alkylene group.

Usually, the polythiol prepolymer (B) include terminal SH groups of formula (I).

A composition comprising a polythiol prepolymer (B) may include also polythiol prepolymers wherein one or more, for example all, terminal SH groups, may further be reacted to provide capped groups. For example, the SH groups may be reacted with ethylene oxide, epichlorohydrin or oxazolidinone. Capping enables introduction of additional terminal functionalities, for example, hydroxyl groups or amino groups, to the prepolymer, or in the alternative introduction of end groups that resist further reaction, such as terminal alkyl groups.

When polymerizing and thus curing the curable composition comprising a curing agent (C) for forming the polythioether polymer (D), a catalyst or initiator may be added, if necessary, to catalyze or initiate the reaction of SH groups of prepolymer (B) with the SH-reactive groups of the curing agent (C) and/or the curing agent (C'). The reaction step of hardening may happen *via* radical or nucleophilic reaction.

A nucleophilic reaction usually involves a thiolate anion and a thiol. When a basic compound is present as a catalyst, the thiol is deprotonated to give a thiolate. The thiol-nucleophilic addition reaction includes the thiol-epoxy nucleophilic ring opening reaction, the thiol-isocyanate reaction and the thiol-Michael addition reaction.

A thiol radical addition may be thermally catalyzed and/or photoinitiated, for example, the thiol-ene addition or the thiol-yne addition allowing two thiol groups to bind to a C≡C bond.

A suitable catalyst for use in curing the instant composition comprising a polythiol prepolymer (B) and a polyepoxy curing agent (C1) may be a tertiary amine catalyst, an imidazole catalyst, an amidine catalyst, a guanidine catalyst or a tertiary phosphine catalyst. The catalyst may be present in an amount of 0.1 to 5 mol%, based on the on 1 mol of the polythiol prepolymer (B) or based on 1 mol of the polythiol monomer (A1).

Examples of a tertiary amine catalyst include N,N-dimethylethanolamine, triethylene diamine (TEDA), bis(2-dimethylaminoethyl)ether (BDMAE), N-methylmorpholine, N-ethylmorpholine, N',N'-dimethylpiperazine, N,N,N',N',N'-pentamethyl-diethylene-triamine (PMDETA), N,N-dimethylcyclohexylamine (DMCHA), N,N-dimethylbenzylamine (DMBA), N,N-dimethylethylamine, N,N,N'N",N"-pentamethyl-dipropylene-triamine (PMDPTA), triethylamine, 1,4-diazabicyclo[2.2.2]octane (DABCO) and DMP-30 (including 2,4,6-tris(dimethylaminomethyl)-phenol), dimethylethanolamine (DMEA), bis-(2-dimethylaminoethyl)ether, triethylamine, N,N,N'-trimethyl-N'-hydroxyethyl-bis(aminoethyl)ether, and N'-(3-(dimethylamino)propyl)-N,N-dimethyl-1,3-propanediamine and any combination thereof.

Examples of an imidazole catalyst include imidazole, 2-methylimidazole, 2-ethylimidazole, 2-isopropylimidazole, 2-undecylimidazole, 2-dodecylimidazole, 2-phenylimidazole, 2-ethyl-4-methyl-imidazole, 2-benzylimidazole, 2,4,5-trimethylimidazole and any combination thereof.

Examples of an amidine catalyst include 1,8-diazabicyclo[5 .4.0]undecene-7 (DBU) or 1,5-diazabicyclo[4.3.0]non-5-ene (DBN).

Examples of an amidine catalyst include diphenyl guanidine or tetramethylguanidine.

Examples of a tertiary phosphine catalyst include triphenylphosphine or tri-n-butylphosphine.

A suitable catalyst for use in hardening the instant composition comprising a polythiol prepolymer (B) and a polyisocyanate curing agent (C2) may be a tertiary amine catalyst, an imidazole catalyst, an amidine catalyst, a guanidine catalyst or a tertiary phosphine catalyst, as mentioned hereinbefore.

The reaction between the polythiol prepolymer (B) and curing agent (C3b) having at least two non-activated C=C bonds, like a vinylene group, a vinylidene group, a vinyl group, an allyl group and any combination thereof, preferably a vinyl group or an allyl group, may be catalyzed by a free radical catalyst. Suitable free radical catalysts include azo compounds, for example, azobisnitrile compounds such as azo(bis)isobutyronitrile (AIBN), organic peroxides, such as benzoyl peroxide and t-butyl peroxide, and inorganic peroxides, such as hydrogen peroxides.

The reaction between the polythiol prepolymer (B) and curing agent (C3b) having at least two non-activated C=C bonds, preferably a vinyl group or allyl group, may also be effected by irradiation with ultraviolet light either with or without a radical initiator/photosensitizer.

When applied to a substrate, the curable composition may be cured at a temperature of 0 to 100°C and humidity from 0 to 100% relative humidity, for example, under ambient conditions (20-25°C and atmospheric humidity).

The curable composition may comprise additives and/or fillers that are customary for such compositions. The choice of suitable conventional additives and fillers as well as their amounts is dependent on the particular end use of the cured article containing the polythioether polymer (D) and may be determined in each individual case by the skilled artisan. The additives may be added to either component of the two-component formulation as desired or necessary.

Suitable conventional additives include, for example, antioxidants, UV absorbers / light stabilizers, metal deactivators, antistats, antifogging agents, blowing / propelling agents, biocides, plasticizers, lubricants, emulsifiers, colorants like pigments or pigment pastes, rheological agents, impact tougheners, catalysts, adhesion regulators, optical brighteners, flame retardants, antidropping agents, nucleating agents, organic solvents and also any mixtures thereof.

Examples of suitable fillers include inorganic or organic particulate materials, inorganic or organic fibrous materials and any mixture thereof. Examples of inorganic fillers include calcium carbonate, magnesium-calcium carbonate (Marble flour), barium sulfate, magnesium silicate, calcium silicate, aluminum silicate, alumina, aluminum hydroxide, silica, for example in form of pyrogenic/fumed silica (e.g., Aerosil), sand or silica flour (ground quartz) or glass in form of glass of hollow and solid glass spheres, glass flakes or glass fibers, for example, virgin short glass fibers or ground glass fibers. Examples of organic fillers include carbon fibers.

The curable composition may be provided as a two-component (2K) formulation, wherein the first component comprises one or more polythiol prepolymers (B) and optionally a catalyst, and the second component comprises the curing agent (C). Additives or fillers may be added to either component as desired or necessary. The two components may be combined and mixed prior to use.

The two components may be formulated to be rendered compatible when combined such that the constituents of the two components may intermix and be homogeneously dispersed to provide a composition for application to a substrate.

Preferably, the polythioether polymer (D) has an atomic ratio of sulfur to oxygen of from 100 : 0 to 20 : 80.

The curable composition may be used in various ways, for example, in so-called CASE application, especially in coating materials, as adhesives, as sealants or as shaped articles.

The curable composition is preferably applied as a two-component formulation.

The curable composition, preferably the two-component formulation, may be applied to any substrate in a usual manner, as known in the art for the various applications, for example, by joining / bonding, sealing or coating or molding. The substrate may be any surface, for example, a gap, a hole or a mold. The substrate may be of any kind of material, usually dependent on the application of the curable composition. Examples of materials for substrates include metal, wood, glass, plastic shaped bodies or plastic films.

A coating composition includes a covering that is applied to the surface of a substrate to, for example, improve the properties of a substrate. The curable composition for a coating may be applied by usual means, such as knife coating, roller coating or spraying to any substrate. Any substrate may be coated, for example, wood, fabric, metal surfaces, mineral surfaces, like concrete, or polymeric surfaces. Generally, the curable composition may be applied to a substrate and cured to form a coating having a thickness of from 0.01 to 10 mm. The curable composition is especially suitable for industrial coatings, for example in construction applications, or coatings for optical applications.

A variety of substrates may be sealed or bonded using the instant curable composition. The substrates to be bonded or sealed may be the same or different from one another.

A sealant includes a composition capable of producing a film that has the ability to resist operational conditions, such as moisture and temperature, and at least partially block the transmission of materials, such as water, fuel and other liquid or gases. The sealant composition is especially useful for manufacturing construction sealants, linings for fuel tanks or aerospace sealants.

The adhesive compositions, preferably the two-component adhesive composition, may be suitably used as a laminating or as a structural adhesive, for example in the automotive or construction sector. Details for bonding processes are usually known to one skilled in the art.

The curable composition may also be used as elastomer for shaped articles, like gaskets or damping elements, (medical) tubing elastic bands or optical sheets.

Accordingly, in a further aspect, the invention relates to the use of a curable composition, as defined in any aspect herein, for preparing an adhesive, a sealant, a coating or a shaped article.

Upon polymerizing the curable composition an article, selected from an adhesive, a sealant, a coating and a shaped article, may be obtained.

Accordingly, in a further aspect, the invention relates to an article, selected from the group consisting of a coating, an adhesive, a sealant and a shaped article, containing a hardened polythioether polymer (D).

In a further aspect, the invention relates to an article containing a polythioether polymer (D), selected from the group consisting of a coating, an adhesive, a sealant and a shaped article, wherein the article is obtainable by applying the curable composition, as defined in any aspect herein, to a substrate and hardening the curable composition to form the polythioether polymer (D).

In a further aspect, the invention relates to a process for applying a curable composition, as defined in aspect herein, to a substrate and hardening the curable composition to form an article containing a polythioether polymer (D), selected from the group consisting of a coating, an adhesive, a sealant and a shaped article.

The polythiol prepolymers (B) may also be used as a building block for an encapsulant for a pharmaceutical composition.

The oxathiolanone group-containing monomer is suitably used as a monomer for enhancing the chemical stability, preferably, the acid stability, of the final cured polythioether polymer (D), preferably compared to a polythioether polymer obtainable by a corresponding process omitting a reaction with a compound of formula (III).

Accordingly, in a further aspect, the invention relates to the use of a compound (A2) of formula 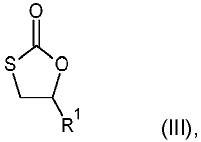 wherein
R¹ is hydrogen, C₁-C₁₈-alkyl or C₁-C₁₈-alkyl substituted with halogen or interrupted with O or S; as a monomer for stabilizing a polythioether polymer (D) towards chemicals, preferably acids, the polythioether polymer (D) is obtainable by a process comprising:
   a) preparing a polythiol prepolymer (B) having at least two groups of formula 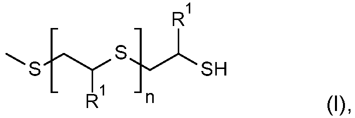 wherein n is 0 to 20, by reacting a polythiol monomer (A1) of formula 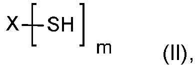 wherein m is 2, 3 or 4 and X is a m-valent linking group, and a compound (A2) of formula 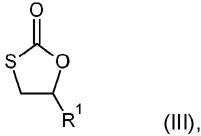 wherein
R¹ is hydrogen, C₁-C₁₈-alkyl or C₁-C₁₈-alkyl substituted with halogen or interrupted with O or S; and
optionally a monomer (A3) having at least two SH-reactive groups, selected from the group consisting of an epoxy group, an isocyanate group, an ethylenically unsaturated group and a halogen group,
and/or a monomer (A3') having at least one group containing a C≡C bond as an SH-reactive group;
and in case a monomer (A3) and/or a monomer (A3') is/are present, the reaction sequence is either
   (i-1) a first step (i-1a) of reacting a polythiol monomer (A1) of formula (II) and a compound (A2) of formula (III), followed by a second step (i-1b) of reacting with a monomer (A3) and/or a monomer (A3'); or
   (i-2) a first step (i-2a) of reacting a polythiol monomer (A1) of formula (II) and a monomer (A3) and/or a monomer (A3'), followed by a second step (i-2b) of reacting with a compound (A2) of formula (III);
      and
b) hardening the polythiol prepolymer (B) with a curing agent (C) having at least two SH-reactive groups and/or a curing agent (C') having at least one group containing a C≡C bond as an SH-reactive group.

In a further aspect, the invention relates to the use of a compound (A2) of formula 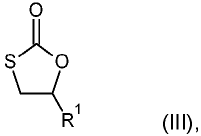 wherein R¹ is hydrogen, C₁-C₁₈-alkyl or C₁-C₁₈-alkyl substituted with halogen or interrupted with O or S; as a monomer for enhancing the stability of a polythioether polymer (D) towards chemicals, preferably acids, the polythioether polymer (D) is obtainable by a process, as defined in any aspect herein.

Modifying the terminal SH groups of a polythiol monomer (A1) with an oxathiolanone group-containing compound (A2) and optional monomers (A3) and/or (A3') yields a polythiol prepolymer (B), which results in cured polymers having enhanced chemical stability, especially having enhanced chemical resistance towards acids.

The process for preparing the polythiol prepolymer (B) is advantageously carried out as a one-pot reaction.

The use of the compound (A2) allows the selective introduction of 1 or more groups of formula 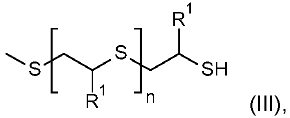 allowing control over end group functionality.

In case of using a substituted compound (A2) of formula (III), the terminal secondary thiol groups of the polythiol prepolymer allows for sufficient storage stability but also allows for a high reactivity to curing agents (C) like polyepoxies, polyisocyanates, poly(meth)acrylates or polyvinyl or polyallyl compounds.

The polythioether polymers (D) offers essentially colorless, transparent and chemically resistant polymers having a high refractive index, making it a candidate for various coatings, sealants, adhesives or elastomers, for example, for optical sealants for glass substrates.

Moreover, polythioether polymers based on dithiol prepolymers (B) and difunctional curing agents (C) allow for enhanced chemically stable polymers compared to polymers having, for example, trithiol monomers, although the network density is higher.

The instant curable compositions allow for rapid curing at ambient temperature.

The instant polythioether polymers may have a glass transition temperature of < 10°C, which allow the application as an aerospace sealant.

The definitions and preferences given for the process mentioned herein-before apply in any combination as well as in any combination for the other aspects of the invention.

The present invention will now be explained in more detail with reference to the following examples. These examples should not be construed as limited. Unless otherwise stated, "%" is always % by weight (wt%).

### Examples

### Shore A hardness

Hardness measurements were conducted with a Shore A hardness tester HAD 100-1 (Sauter GmbH). 3 mm samples were placed on a hard surface, and the hardness was tested on four different locations on the sample surface. The average of the four values was determined.

### Glass transition temperature T_{g}

The glass transition temperature was determined by differential scanning calorimetry (DSC) in a temperature range of -170 to 400°C at a heating rate of 10 k/min in air atmosphere (Perkin-Elmer Pyris-1).

### Acid stability

A cured specimen was weighed in a tared screw cap glass vial to determine the initial weight of the sample. Hereafter, the sample was either treated with concentrated hydrochloric acid (37 wt%) or a mixture of 50 vol% formic acid and 50 vol% of propionic acid. The samples containers were sealed and stored for 24 hours at room temperature. After this period the appearance of the samples was checked. If the sample had retained a solid cubic form, the supernatant acid was removed, the sample was dried with a paper tissue and weighed again to determine the changes in weight.

A sample was evaluated as "disintegrated", if the sample did not retain the cubic form, for example, the sample was dissolved, broken, forming a slurry, etc.

A sample was evaluated as "partly disintegrated", if the cubic form was slightly damaged, for example, having round corners, or some pieces broke off.

### SH content

The SH content in wt% is determined *via* titration. A weighed thiol group-containing polyether polymer was dissolved in a mixed solution of toluene and pyridine, an aqueous potassium iodide solution was added thereto, and then the resulting solution was titrated with an iodine standard solution.

### Number average molecular weight (Mₙ)

The number average molecular weight is determined through GPC (gel permeation chromatography) against polystyrene standards. THF (tetrahydrofurane) was used as a mobile phase or calculated based on SH content.

### Materials used:

TMPTGE: trimethylolpropane triglycidyl ether (Sigma-Aldrich)
TEPI: tris(2,3-epoxypropyl) isocyanurate (Sigma-Aldrich)
DABCO: 1,4-diazabicyclo[2.2.2]octane
DBU: 1,8-diazabicyclo[5.4.0]undec-7-ene
NMM: 4-methylmorpholine
NMI: 1-methylimidazole
Basonat HB 100: polyisocyanate based on biuret-modified hexamethylene diisocyanate; NCO content [%] ~23
Basonat HI 2000 NG: polyisocyanate based on isocyanurate-modified hexamethylene diisocyanate; NCO content [%] 22-23
Laromer PE 9155: high functional polyester acrylate resin
2,5-furanedione, polymer with 2,2-bis(hydroxymethyl)-1,3-propanediol and 2-(chlormethyl)-oxirane, 2-propenoate
TAC: triallyl cyanurate (Sigma-Aldrich)
TAIC: triallyl isocyanurate (Sigma-Aldrich)
Irgacure 819: phenylbis(2,4,6-trimethylbenzoyl)phosphine oxide
KarenzMT BD1: 1,4-bis(3-mercaptobutyryloxy)butane (Resonac); SH equivalent 142-152 g/mol 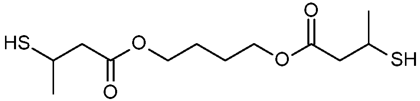
KarenzMT NR1 : 1,3,5-tris[2-(3-mercaptobutanoyloxy)ethyl]-1,3,5-triazine-2,4,6(1H,3H,5H)-trione (Resonac) ; SH equivalent 183-195 g/mol 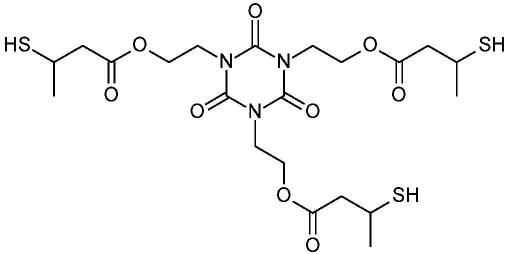
DMDO : 1,8-dimercapto-3,6-dioxaoctane (TCI Chemicals) 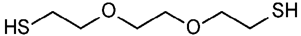
Tetraethylene glycol-dithiol (Sigma-Aldrich) 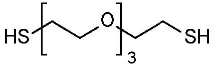
EGBMP: ethylene glycol bis(3-mercaptopropionate) (Sigma-Aldrich) 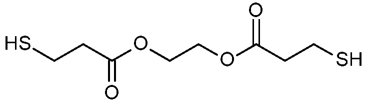
TMPT(3-MP): trimethylolpropane tris(3-mercaptopropionate) (Sigma-Aldrich) 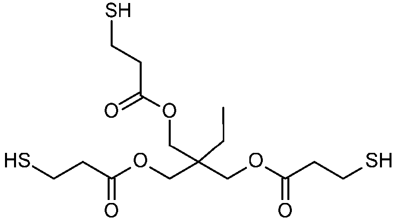
Thioplast^{®} G44: liquid polysulfide polymer with thiol end groups (Nouryon) average molecular weight, relative to SEC standard <1100 g/mol branching, calculated on mol% TCP: 0.5 mol%
SH content, related to viscosity/molecular weight: 6.0-7.0%
Thiokol^{®} LP-3: liquid diethoxymethane polysulfide polymer (Toray) of general formula 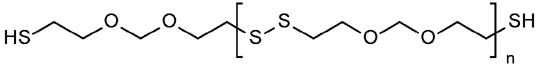 average molecular weight 1000 g/mol; SH content 5.9-7.7; crosslinking agent 2.0%
Capcure^{®} 3-800: mercaptan-terminated liquid epoxy hardener (Gabriel)
Poly[oxy(methyl-1,2-ethanediyl)], α-hydro-ω-hydroxy, ether with 2,2-bis(hydroxymethyl)-1,3-propanediol (4:1), 2-hydroxy-3-mercaptopropyl ether; SH value 3-5 meg/g
Compound (A2) of formula (Illa) = H-CTC (1,3-oxathiolan-2-one)
Compound (A2) of formula (Illb) = Me-CTC (5-methyl-1,3-oxathiolan-2-one)
VAZO^{™} 67: 2,2'-azobis(2-methylbutyronitrile)
Ambosol^{®} MP 25: magnesium silicate

### Synthesis Example 1

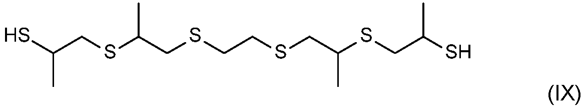

The polythioether of formula (IX) was prepared according to Example 9 of WO 2020/216873 A1. SH content: 13.7

### Synthesis Example 2

2,2'-(ethylenedioxy)-diethanethiol (550 mmol) and 11.3 mmol of triallyl cyanurate (TAC) as well as 472 mmol of diethyleneglycol divinyl ether were mixed. The mixture was heated to 77°C, and VAZO^{™} 67 (4.3 mmol) was added in 3 portions under stirring. The reaction was cooled to room temperature after 8 hours. The product was obtained as a colorless transparent liquid. SH content: 2.9

### Thermal curing of a polythioether / thiol component with epoxides

### General procedure

A thiol component and a catalytic amount of an organic N-containing base (5.00 mol% per SH group) were added into a speed mixer cup and blended at 3000 rpm until a homogenous mixture was obtained. Hereto, the epoxide (1.0 eq. epoxide groups per SH eq.) was added, and the blending process was repeated at 3000 rpm. The resulting mixture was poured into cube-shaped silicone molds (D x W x H: 1 cm x 1 cm x 1 cm) and cured for 24 hours at room temperature (20-25°C) to obtain colorless polymeric cubes.

### Example 1

The polythioether of formula (IX) (7.50 g, obtained in Synthesis Example 1) and a catalytic amount of DABCO (174 mg, 5.00 mol% per SH group) were added into a speed mixer cup and blended at 3000 rpm (2 x 2 min) to yield a homogenous mixture. Hereto, TMPTGE (4.54 g, 1.0 eq. epoxide groups per SH eq.) was added, and the blending process was repeated at 3000 rpm (2 x 2 min). The resulting mixture was poured into cube-shaped silicone molds (D x W x H: 1 cm x 1 cm x 1 cm) and cured for 24 hours at room temperature to obtain colorless and transparent polymeric cubes.

### Comparative Examples 1 to 10

The general procedure for thermal curing of a thiol component and an epoxide was applied using corresponding amounts of DABCO as organic N-containing base, of TMPTGE as an epoxide and of the thiol components, as listed in Table 1.

The results of data determined are listed in Table 1.

**Table 1**

| | Stability in HCL_{conc} | Stability in EtCOOH/HCOOH | Shore A hardness | T_{g} (°C) |
|---|---|---|---|---|
| Ex. 1 | stable ±0 wt% | intact swollen (reversible) +85 wt% | 40 | -23 |
| Comp. Ex. 1 | disintegrated (dissolved) malodorous | disintegrated | 50 | n.d. |
| KarenzMT BD1 | | | | |
| Comp. Ex. 2 | disintegrated | disintegrated | 75 | n.d. |
| KarenzMT NR1 | | | | |
| Comp. Ex. 3 | disintegrated | disintegrated | 60 | -22 |
| DMDO | | | | |
| Comp. Ex. 4 | disintegrated malodorous | disintegrated | 68 | -1 |
| Tetraethylene glycol-dithiol | | | | |
| Comp. Ex. 5 | disintegrated | disintegrated | 56 | n.d. |
| EGBMP | | | | |
| Comp. Ex. 6 | disintegrated | disintegrated | 76 | -2 |
| TMPT(3-MP) | | | | |
| Comp. Ex. 7 | disintegrated | disintegrated, color change to pink | 49 | -44 |
| Thioplast G44 | | | | |
| Comp. Ex. 8 | disintegrated | disintegrated | 52 | -46 |
| Thiokol LP3 | | | | |
| Comp. Ex. 9 | disintegrated | disintegrated | 65 | -13 |
| Capcure 3-800 | | | | |
| Comp. Ex. 10 | disintegrated | disintegrated | 47 | -58 |
| Thiol component of Synthesis Ex. 2 | | | | |
| n.d. = not determined | | | | |

### Example 2

The procedure of Example 1 was repeated apart from a corresponding amount of TEPI and a corresponding amount of DBU were used. Colorless and transparent polymeric cubes were obtained.

### Comparative Examples 11 to 18

The general procedure for thermal curing of a thiol component and an epoxide was applied using corresponding amounts of TEPI as an epoxide, of the thiol components and of the organic N-containing bases, as listed in Table 2.

The results of data determined are listed in Table 2.

**Table 2**

| | Stability in HCL_{conc} | Stability in EtCOOH/HCOOH | Shore A hardness | T_{g} (°C) |
|---|---|---|---|---|
| Ex. 2 | stable +2 wt% | stable, intact +63 wt% (reversible) | 41 | -23 |
| Comp. Ex. 11 | disintegrated | disintegrated | 42 | n.d. |
| KarenzMt BD1 / DABCO | | | | |
| Comp. Ex. 12 | disintegrated malodorous | disintegrated | 82 | n.d. |
| KarenzMT NR1 / DABCO | | | | |
| Comp. Ex. 13 | disintegrated malodorous | disintegrated | 59 | 7 |
| DMDO / NMI | | | | |
| Comp. Ex. 14 | disintegrated | disintegrated | 71 | 3 |
| TMPT(3-MP) / DABCO | | | | |
| Comp. Ex. 15 | disintegrated | disintegrated | 17 | -45 |
| Thioplast G44 / DABCO | | | | |
| Comp. Ex. 16 | disintegrated | disintegrated | 30 | -48 |
| Thiokol LP3 / DABCO | | | | |
| Comp. Ex. 17 | disintegrated malodorous | disintegrated | 9 | -13 |
| Capcure 3-800 / DABCO | | | | |
| Comp. Ex. 18 | disintegrated | disintegrated | 42 | -57 |
| Thiol component of Synthesis Ex. 2 / DABCO | | | | |

### Thermal curing of a polythioether / a thiol component with an isocyanate compound

### General procedure

A thiol component (SH content: 13.7 wt%) and the isocyanate compound (1.0 eq. of isocyanate groups per SH eq.) were added into a speed mixer cup and blended at 3000 rpm until a homogenous mixture was obtained. Hereto, a catalytic amount of an organic N-containing base (5.00 mol% per SH group) was added, and the blending process was repeated at 3000 rpm.

The resulting mixture was poured into cube-shaped silicone molds (D x W x H: 1 cm x 1 cm x 1 cm) and cured for 24 hours at room temperature to obtain colorless polymeric cubes.

### Example 3

A polythioether of formula (IX) (7.00 g, obtained in Synthesis Example 1) and Basonat HB 100 (5.42 g, 1.0 eq. of isocyanate groups per SH equiv., NCO content: 22.0-23.0 wt%) were added into a speed mixer cup and blended at 3000 rpm (2 x 2 min). Hereto, a catalytic amount of 4-methylmorpholine (162 µL, 5.00 mol% per SH group) were added and the blending process was repeated at 3000 rpm (1 x 2 min). The resulting mixture was poured into cube-shaped silicone molds (D x W x H: 1 cm x 1 cm x 1 cm) and cured for 24 hours at room temperature to obtain colorless and transparent polymeric cubes.

### Comparative Examples 19 to 27

The general procedure for thermal curing of a thiol component and an isocyanate compound was applied using corresponding amounts of Basonat HB 100 as an isocyanate compound, of the thiol components and of the organic N-containing bases, as listed in Table 3.

The results of data determined are listed in Table 3.

**Table 3**

| | Stability in HCL_{conc} | Stability in EtCOOH/HCOOH | Shore A hardness | T_{g} (°C) |
|---|---|---|---|---|
| Ex. 3 | stable +7 wt% (reversible) | stable, intact +59 wt% (reversible) | 73 | 4 |
| Comp. Ex. 19 | disintegrated malodorous | partly disintegrated | 93 | n.d. |
| KarenzMt BD1 / NMM | | | | |
| Comp. Ex. 20 | partly disintegrated | partly disintegrated | 90 | n.d. |
| KarenzMT NR1 / NMM | | | | |
| Comp. Ex. 21 | disintegrated malodorous | disintegrated | 90 | n.d. |
| DMDO / --- | | | | |
| Comp. Ex. 22 | disintegrated | disintegrated | 58 | -34 |
| Tetraethylene glycol-dithiol / NMM | | | | |
| Comp. Ex. 23 | disintegrated | disintegrated | 76 | n.d. |
| EGBMP / NMI | | | | |
| Comp. Ex. 24 | disintegrated | disintegrated | 85 | n.d. |
| TMPT(3-MP) / --- | | | | |
| Comp. Ex. 25 | disintegrated | partly disintegrated | 60 | -38 |
| Thioplast G44 / NMM | | | | |
| Comp. Ex. 26 | disintegrated | partly disintegrated | 62 | -42 |
| Thiokol LP3 / NMM | | | | |
| Comp. Ex. 27 | disintegrated | disintegrated | 52 | n.d. |
| Thiol component of Synthesis Ex. 2 / NMM | | | | |

### Example 4

A polythioether of formula (IX) (7.00 g, obtained in Synthesis Example 1) and Basonat HI 2000 NG (5.42 g, 1.0 eq. of isocyanate groups per SH equiv., NCO content: 23 wt%) were added into a speed mixer cup and blended at 3000 rpm (2 x 2 min). Hereto, a catalytic amount of 4-methylmorpholine (162 µL, 5.00 mol% per SH group) were added and the blending process was repeated at 3000 rpm (1 x 2 min). The resulting mixture was poured into cube-shaped silicone molds (D x W x H: 1 cm x 1 cm x 1 cm) and cured for 24 hours at room temperature to obtain colorless and transparent polymeric cubes.

### Comparative Examples 28 to 35

The general procedure for thermal curing of a thiol component and an isocyanate compound was applied using corresponding amounts of Basonat HB 100 as an isocyanate compound, of the thiol components and of the organic N-containing bases, as listed in Table 4.

The results of data determined are listed in Table 4.

**Table 4**

| | Stability in HCL_{conc} | Stability in EtCOOH/HCOOH | Shore A hardness | T_{g} (°C) |
|---|---|---|---|---|
| Ex. 4 | stable, intact +8 wt% (reversible) | stable, intact +51 wt% (reversible) | 71 | 8.5 |
| Comp. Ex. 28 | disintegrated | partly disintegrated | 92 | n.d. |
| KarenzMt BD1 / NMM | | | | |
| Comp. Ex. 29 | disintegrated malodorous | partly disintegrated | 92 | n.d. |
| KarenzMT NR1 / NMM | | | | |
| Comp. Ex. 30 | partly disintegrated | partly disintegrated | n.d. | n.d. |
| DMDO / --- | | | | |
| Comp. Ex. 31 | disintegrated | disintegrated | 48 | 24 |
| EGBMP / NMI | | | | |
| Comp. Ex. 32 | disintegrated | disintegrated | 83 | n.d. |
| TMPT(3-MP) / imidazole | | | | |
| Comp. Ex. 33 | disintegrated | disintegrated | 66 | -33 |
| Thioplast G44 / NMM | | | | |
| Comp. Ex. 34 | disintegrated | partly disintegrated | 67 | -38 |
| Thiokol LP3 / NMM | | | | |
| Comp. Ex. 35 | disintegrated | disintegrated | 55 | n.d. |
| Thiol component of Synthesis Ex. 2 / NMM | | | | |

### Thermal curing of a polythioether / a thiol component with an acrylate compound

### General procedure

A thiol component and the acrylate compound (1.0 eq. of acrylate groups per SH eq.) were added into a speed mixer cup and blended at 3000 rpm until a homogenous mixture was obtained. Hereto, a catalytic amount of an organic N-containing base (5.00 mol% per SH group) was added, and the blending process was repeated at 3000 rpm. The resulting mixture was poured into cube-shaped silicone molds (D x W x H: 1 cm x 1 cm x 1 cm) and cured for 24 hours at room temperature to obtain colorless polymeric cubes.

### Example 5

A polythioether of formula (IX) (7.00 g, obtained in Synthesis Example 1) and Laromer 9155 (4.15 g, 1.0 eq. of acrylate groups per SH equiv.) were added into a speed mixer cup and blended at 3000 rpm (2 x 2 min). Hereto, a catalytic amount of triethylamine (200 µL, 5.00 mol% per SH group) was added, and the blending process was repeated at 3000 rpm (1 x 2 min). The resulting mixture was poured into cube-shaped silicone molds (D x W x H: 1 cm x 1 cm x 1 cm) and cured for 24 hours at room temperature to obtain colorless and transparent polymeric cubes.

### Comparative Examples 36 to 40

The general procedure for thermal curing of a thiol component and an acrylate compound was applied using corresponding amounts of Laromer 9155, the thiol components and of the organic N-containing base, as listed in Table 5.

The results of data determined are listed in Table 5.

**Table 5**

| | Stability in HCL_{conc} | Stability in EtCOOH/HCOOH | Shore A hardness | T_{g} (°C) |
|---|---|---|---|---|
| Ex. 5 | stable +12 wt% (reversible) | stable +14 wt% (reversible) | 67 | -18 |
| Comp. Ex. 36 | disintegrated | partly disintegrated | 74 | n.d. |
| KarenzMt BD1 / NEt₃ | | | | |
| Comp. Ex. 37 | partly disintegrated -7.4 wt% | disintegrated | 94 | n.d. |
| KarenzMT NR1 / NEt₃ | | | | |
| Comp. Ex. 38 | disintegrated | disintegrated | 79 | -14 |
| DMDO / NEt₃ | | | | |
| Comp. Ex. 39 | disintegrated malodorous | disintegrated | 73 | -12 |
| Capcure 3-800 | | | | |
| Comp. Ex. 40 | disintegrated | disintegrated | 55 | -58 |
| Thiol component of Synthesis Ex. 2 / NEt₃ | | | | |

### Photo-curing of a polythioether / thiol component with allylic compounds

### General procedure

A thiol component and a catalytic amount of a photoinitiator (2.50 mol% per SH group) were added into a speed mixer cup and blended at 3000 rpm until a homogenous mixture was obtained. Hereto, an allyl compound (1.0 eq. of allyl groups per SH eq.) was added, and the blending process was repeated at 3000 rpm. The resulting mixture was poured into cuboid silicone molds (D x W x H: 8 cm x 1 cm x 0.4 cm) and irradiated with blue light (λ = 405 nm) for 15 min at 40°C to obtain colorless polymers.

### Example 6

A polythioether of formula (IX) (10.0 g, obtained in Synthesis Example 1) and a catalytic amount of Irgacure 819 (433 mg, 2.50 mol% per SH group) were added into a speed mixer cup and blended at 3000 rpm (3 x 2 min) to yield a homogenous mixture. Hereto, triallyl cyanurate (3.53 g, 1.0 eq. of allyl groups per SH equiv.) was added and the blending process was repeated at 3000 rpm (2 x 2 min). The resulting mixture was poured into cuboid silicone molds (D x W x H: 8 cm x 1 cm x 0.4 cm) and irradiated with blue light (λ = 405 nm) for 15 min at 40°C to obtain colorless and transparent polymers.

### Comparative Examples 41 to 49

The general procedure for photo-curing of a thiol component and an allylic compound was applied using corresponding amounts of Irgacure 819 as a photoinitiator, of triallyl cyanurate as an allylic compound and of thiol components, as listed in Table 6.

The results of data determined are listed in Table 6.

**Table 6**

| | Stability in HCL_{conc} | Stability in EtCOOH/HCOOH | Shore A hardness | T_{g} (°C) |
|---|---|---|---|---|
| Ex. 6 | stable, intact +8 wt% (reversible) | stable, intact +31 wt% (reversible) | 60 | -26 |
| Comp. Ex. 41 | disintegrated malodorous | disintegrated | 38 | n.d. |
| KarenzMt BD1 | | | | |
| Comp. Ex. 42 | disintegrated malodorous | partly disintegrated | 93 | n.d. |
| Karenz MT NR1 | | | | |
| Comp. Ex. 43 | disintegrated | disintegrated | 52 | -20 |
| DMDO | | | | |
| Comp. Ex. 44 | disintegrated | disintegrated | 59 | n.d. |
| EGBMP | | | | |
| Comp. Ex. 45 | disintegrated | disintegrated | 78 | 19 |
| TMPT(3-MP) | | | | |
| Comp. Ex. 46 | disintegrated | disintegrated | 50 | -46 |
| Thioplast G44 | | | | |
| Comp. Ex. 47 | disintegrated | disintegrated | 66 | -46 |
| Thiokol LP3 | | | | |
| Comp. Ex. 48 | disintegrated | disintegrated | 56 | n.d. |
| Capcure 3-800 | | | | |
| Comp. Ex. 49 | disintegrated | partly disintegrated | 41 | n.d. |
| Thiol component of Synthesis Ex. 2 | | | | |

### Example 7

A polythioether of formula (IX) (10.0 g, obtained in Synthesis Example 1) and a catalytic amount of Irgacure 819 (433 mg, 2.50 mol% per SH group) were added into a speed mixer cup and blended at 3000 rpm (3 x 2 min) to yield a homogenous mixture. Hereto, triallyl isocyanurate (3.53 g, 1.0 eq. of allyl groups per SH equiv.) was added and the blending process was repeated at 3000 rpm (2 x 2 min). The resulting mixture was poured into cuboid silicone molds (D x W x H: 8 cm x 1 cm x 0.4 cm) and irradiated with blue light (λ = 405 nm) for 15 min at 40°C to obtain colorless and transparent polymers.

### Comparative Examples 50 to 56

The general procedure for photo-curing of a thiol component and an allylic compound was applied using corresponding amounts Irgacure 819 as a photoinitiator, of triallyl isocyanurate as an allylic compound and of the thiol components, as listed in Table 7.

The results of data determined are listed in Table 7.

**Table 7**

| | Stability in HCL_{conc} | Stability in EtCOOH/HCOOH | Shore A hardness | T_{g} (°C) |
|---|---|---|---|---|
| Ex. 7 | stable ±0 wt% | stable, intact +14 wt% (reversible) | 57 | -16 |
| Comp. Ex. 50 KarenzMt BD1 | partly disintegrated | disintegrated | 52 | n.d. |
| Comp. Ex. 51 DMDO | disintegrated malodorous | disintegrated | 48 | -5 |
| Comp. Ex. 52 EGBMP | disintegrated | disintegrated | 66 | n.d. |
| Comp. Ex. 53 Thioplast G44 | disintegrated | disintegrated color change to pink | 44 | -46 |
| Comp. Ex. 54 Thiokol LP3 | disintegrated | disintegrated | 61 | -45 |
| Comp. Ex. 55 Capcure 3-800 | partly disintegrated malodorous | disintegrated | 59 | n.d. |
| Comp. Ex. 56 Thiol component of Synthesis Ex. 2 | disintegrated | partly disintegrated | 43 | n.d. |

The results mentioned in the Tables 1 to 7 demonstrate that the polythioether of formula (IX) provides polymers having a significantly enhanced acid stability, compared to polymers based on conventionally used thiol components.

### Preparation of polythiol prepolymers (B)

### a) General procedure for reacting a polythiol monomer (A) and a compound (A2)

A round bottom flask was flushed with nitrogen and subsequently charged with a polythiol monomer and 1,8-diazabicyclo(5.4.0)undec-7-ene (DBU) and heated to the temperature given in Tables 8 and 9. Then one or two different compounds (A2) were added as a mixture or subsequently within the time and at the temperature given in Table 8. After cooling down, the mixture was dissolved in dichloromethane, and DBU was removed by aqueous extraction. After phase separation the organic phase was dried over sodium sulfate and filtered. After removal of the solvent under vacuum, the product (PTE 1 to PTE 6) was obtained as a colorless or slightly yellowish, transparent liquid and was analysed using GPC and/or titration of the thiol end groups (SH content).

**Table 8**

| | PTE 1 | PTE 2 | PTE 3 | | PTE 4 | |
|---|---|---|---|---|---|---|
| polythiol monomer | DMDO | DMDO | DMDO | | DMDO | |
| amount [mmol] equivalents | 1804.6 1 | 412.2 1 | 313.7 1 | | 293.3 1 | |
| compound (A2) equivalents | Me-CTC 6 | Me-CTC 10 | Me-CTC 1 | H-CTC 3 | Me-CTC 2 | H-CTC 2 |
| DBU eq. | 0.1 | 0.1 | 0.1 | | 0.1 | |
| order of addition of compounds (A2) | | | mixture of 1 eq. of Me-CTC and 2.1 eq. of H-CTC, then 0.9 eq. of H-CTC | | mixture of 2 eq. of Me-CTC and 1 eq. of H-CTC, then 1 eq. of H-CTC | |
| duration of dosing and post reaction | 4 h + 16 h | 0.5 h + 5 h | 3 h + 0 h + 1 h + 3.5 h | | 3 h + 0 h + 1 h + 8 h | |
| T [°C] of dosing and post reaction | 60°C, 70°C | 80°C | 50°c, 55°C, 60°C | | 50°c, 55°C, 60°C | |
| yield [%] | 98 | 95 | 93 | | 92 | |
| Mₙ [g/mol] | | | | | | |
| theory | 627 | 924 | 437 | | 451 | |
| GPC | 622 | 1153 | 238 | | 237 | |
| PDI (GPC) | 1.47 | 1.17 | 1.88 | | 2.12 | |
| SH content | | | | | | |
| theory | 10.5 | 7.2 | 15.1 | | 14.7 | |
| titration | 10.3 | 7.1 | 14.7 | | n.d. | |

**Table 9**

| | PTE 5 | PTE 6 |
|---|---|---|
| polythiol monomer | 2,2-thiodiethanethiol | Capcure 3-800 |
| amount [mmol] | 84.6 | 10.7 |
| equivalents | 1 | 1 |
| compound (A2) | Me-CTC | Me-CTC |
| equivalents | 10 | 12 |
| DBU eq. | 0.1 | 0.1 |
| duration of dosing and post reaction | 1 h + 1 h | 1 h + 4 h |
| T [°C] of dosing and post reaction | 60°C | 60°C |
| yield [%] | 96 | 88 |
| Mₙ [g/mol] | | |
| theory | 896 | 1826 |
| GPC | 672 | 2699 |
| PDI (GPC) | 1.49 | 2.33 |
| SH content | | |
| theory | 7.4 | 5.4 |
| titration | 7.0 | 3.4 |

### b) General procedure of the radical addition of the products of Table 8 (PTE 1 to PTE 4) to monomers (A3)

A round bottom flask was flushed with nitrogen and subsequently charged with a PTE, a divinylether (monomer A3), in some cases triallyl cyanurate (TAC), and VAZO 67 and heated to 77°C for the duration given in Tables 10 and 11. The completion of the reaction was checked with NMR analysis. After cooling down, the products were analysed using GPC and titration of the thiol end groups (SH content).

**Table 10**

| Example | 8 | 9 | 10 | 11 |
|---|---|---|---|---|
| PTE | 2 | 2 | 1 | 1 |
| amount [g] | 100.0 | 98.0 | 110.0 | 110.0 |
| divinylether | di(ethyleneglycol) divinylether | di(ethyleneglycol) divinylether | tri(ethyleneglycol) divinylether | tri(ethyleneglycol) divinylether |
| amount [g] | 8.6 | 12.6 | 23.6 | 23.1 |
| VAZO 67 [mg] | 104 | 102 | 178 | 85 |
| duration [h] | 7 | 6 | 10 | 10 |
| yield [g] | 102 | 104 | 126 | |
| Mₙ (GPC) [g/mol] | 2182 | 3430 | 2388 | |
| PDI (GPC | 1.72 | 1.82 | 2.13 | |
| SH content | 3.4 | 2.2 | 2.9 | |

**Table 11**

| Example | 12 | 13 | 14 |
|---|---|---|---|
| PTE | 3 | 4 | 4 |
| amount [g] | 42.0 | 113.0 | 178.0 |
| divinylether (DVE) | tri(ethyleneglycol) divinylether | tri(ethyleneglycol) divinylether | tri(ethyleneglycol) divinylether |
| amount [g] | 14.9 | 33.8 | 57.8 |
| TAC amount [g] | 0.74 | 2.55 | 6.09 |
| VAZO 67 [mg] | 460 | 530 | 627 |
| duration [h] | 1) TAC + 230 mg VAZO 67 for 3.5 h; | 1) TAC + 242 mg VAZO 67 for 14 h; | 1) TAC + 346 mg VAZO 67 for 18 h; |
| | 2) DVE + 230 mg VAZO 67 for 6 h | 2) DVE + 290 mg VAZO 67 for 6 h | 2) DVE + 281 mg VAZO 67 for 6 h |
| Yield [g] | 53 | | 241 |
| Mₙ (GPC) [g/mol] | 4875 | 1812 | 3024 |
| PDI (GPC) | 3.74 | 2.75 | 1.66 |
| SH content [g/100 g] | 1.1 | 3.3 | 2.1 |

### Example 16

A round bottom flask was flushed with nitrogen and subsequently charged with 123 g of the product of Example 11, 2.8 g of trimethylolpropane triglycidyl ether and 8.9 g of 1,8-diazabicyclo(5.4.0)-undec-7-ene (DBU). The mixture was heated to 100°C for 5 hours. After cooling down, the mixture was dissolved in dichloromethane and DBU was removed by aqueous extraction. After phase separation the organic phase was dried over sodium sulfate and filtered. After removal of the solvent under vacuum, the product was obtained as a slightly yellowish, transparent liquid.
GPC analysis: Mn = 4313 g/mol, PDI = 4.09
SH content: 1.0

### Example 17

a) A round bottom flask was flushed with nitrogen and subsequently charged with 450 g of DMDO, 12.4 g of triallyl cyanurate (TAC) and 1.78 g of VAZO 67 and heated to 55°C. 321 g of di(ethyleneglycol) divinylether were added over a period of 6 hours while maintaining the temperature of the reaction mixture below 80°C. Further 1.78 g of VAZO 67 were added, and the mixture was stirred at 77°C for further 15.5 hours. The completion of the reaction was determined by 1H NMR analysis (yield: 771 g).
   GPC analysis: Mₙ = 3400 g/mol, PDI = 2.22
   SH content: 2.9
b) A round bottom flask was flushed with nitrogen and subsequently charged with 220 g of the product of step a) and 4.4 g of 1,8-diazabicyclo(5.4.0)undec-7-ene (DBU) and heated to 55°C. Then 69.1 g of 5-methyl-1,3-oxathiolan-2-one (Me-CTC) were added within 80 min while maintaining the temperature of the reaction mixture below 65°C. Afterwards, the mixture was stirred at 60°C for 45 min, then slowly heated to 80°C within 45 min and stirred at 80°C for further 3.5 hours. The completion of the reaction was determined by 1H NMR analysis. After cooling down, the mixture was dissolved in dichloromethane and DBU was removed by aqueous extraction. After phase separation the organic phase was dried over sodium sulfate and filtered. After removal of the solvent under vacuum, the product (245 g) was obtained as a slightly yellowish, transparent liquid.
   GPC analysis: Mₙ = 3200 g/mol, PDI = 2.30
   SH content: 2.2

### Example 18

180 g (195 mmol) of PTE 2 and 0.8 g (7 mmol) of potassium tert-butoxide were added to a pressure reactor. The reactor was put under nitrogen and heated to 120°C. 18.8 g (427 mmol) of ethylene oxide were added within 6 hours, and the mixture was stirred for further 10 hours at the same temperature. The crude product was placed in a 500 mL round bottom flask and 6 g of Ambosol^{®} MP 25 (magnesium silicate, scavenger) were added. The mixture was rotated under vacuum at 100°C for 2 hours and then filtered. 190 g of the product were obtained as a slightly yellowish liquid. NMR analysis showed the complete conversion of the thiol end groups to primary alcohol end groups.

## Claims

1. A curable composition comprising a
(i) a polythiol prepolymer (B) having at least two groups of formula 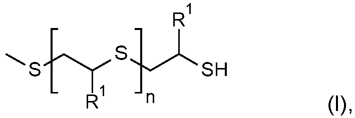 wherein n is 0 to 20, obtainable by a process, the process comprising:
reacting a polythiol monomer (A1) of formula 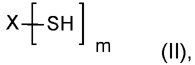 wherein m is 2, 3 or 4 and X is a m-valent linking group, and a compound (A2) of formula 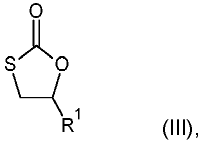 wherein
R¹ is hydrogen, C₁-C₁₈-alkyl or C₁-C₁₈-alkyl substituted with halogen or interrupted with O or S; and
optionally a monomer (A3) having at least two SH-reactive groups, selected from an epoxy group, an isocyanate group, an ethylenically unsaturated group, a halogen group and any combination thereof,
and/or a monomer (A3') having at least one group containing a C≡C bond as an SH-reactive group;
and in case a monomer (A3) and/or a monomer (A3') is/are present, the reaction sequence is either
(i-1) a first step (i-1a) of reacting a polythiol monomer (A1) of formula (II) and a compound (A2) of formula (III), followed by a second step (i-1b) of reacting with a monomer (A3) and/or a monomer (A3'); or
(i-2) a first step (i-2a) of reacting a polythiol monomer (A1) of formula (II) and a monomer (A3) and/or a monomer (A3'), followed by a second step (i-2b) of reacting with a compound (A2) of formula (III);
and
(ii) a curing agent (C) having at least two SH-reactive groups and/or a curing agent (C') having at least one group containing a C≡C bond as an SH-reactive group.

2. The curable composition according to claim 1, wherein R¹ is hydrogen, C₁-C₄-alkyl or C₁-C₁₂-alkyl interrupted with O or S.

3. The curable composition according to claim 1 or 2, wherein the m-valent linking group X of the polythiol monomer (A1) is
a divalent linking group X¹ selected from C₁-C₁₈-alkylene; C₁-C₁₈-alkylene substituted with C₁-C₄-alkoxy, C₁-C₄-alkylthio or halogen, and/or interrupted with O, S, -COO-, C₅-C₈-cycloalkylene optionally interrupted with O or S, C₆-C₁₂-arylene, C₆-C₁₂-aryleneoxy, C₆-C₁₂-arylenethio, 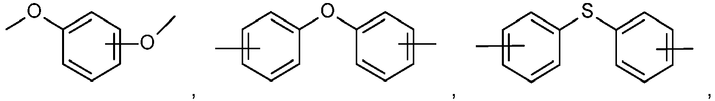 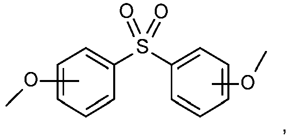 and C₂-C₅-heteroarylene;
C₅-C₈-cycloalkylene; C₅-C₈-cycloalkylene substituted with C₁-C₄-alkoxy, C₁-C₄-alkylthio or halogen, and/or interrupted with O or S;
C₆-C₁₂-arylene; C₆-C₁₂-arylene substituted with C₁-C₄-alkyl, C₁-C₄-alkoxy, C₁-C₄-alkylthio, halogen; and
C₂-C₅-heteroarylene; C₂-C₅-heteroarylene substituted with C₁-C₄-alkyl, C₁-C₄-alkoxy, C₁-C₄-alkylthio or halogen;
or
a trivalent linking group X², wherein X² is selected from benzenetriyl, triazinetriyl, 2,4,6-trioxo-1,3,5-triazine-triyl and a trivalent linking group composed of either benzenetriyl, triazinetriyl, 2,4,6-trioxo-1,3,5-triazine-triyl or methylidyne and a divalent linking group X^{1a};
or
a tetravalent group X³, wherein X³ is a tetravalent linking group composed of either a group derived from methane or benzene and a divalent organic group X^{1a}; and
the divalent organic group X^{1a} is selected from C₁-C₁₈-alkylene, C₁-C₁₈-alkylene interrupted with O or S, and C₁-C₁₈-alkyleneoxy.

4. The curable composition according to any one of the preceding claims, wherein the m-valent linking group X of the polythiol monomer (A1) is
a divalent linking group X¹ selected from C₁-C₁₈-alkylene; C₁-C₁₈-alkylene interrupted with O, S, C₅-C₆-cycloalkylene, phenylene, triazine-2,4-diyl, or 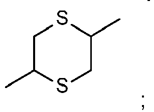
C₅-C₆-cycloalkylene; phenylene; 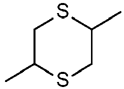 and triazine-2,4-diyl; or
a trivalent linking group X², wherein X² is a trivalent linking group composed of benzenetriyl, triazinetriyl, 2,4,6-trioxo-1,3,5-triazine-triyl or methylidyne and a divalent linking group X^{1a}; and the divalent linking group X^{1a} is selected from C₁-C₁₂-alkylene, C₁-C₁₂-alkylene interrupted with O or S, and C₁-C₄-alkyleneoxy.

5. The curable composition according to any one of the preceding claims, wherein m is 2 or 3.

6. The curable composition according to any one of the preceding claims, wherein the m-valent linking group X of the polythiol monomer (A2) is a divalent linking group X¹ selected from C₁-C₁₂-alkylene, -(CH₂CH₂S)ₚ-CH₂CH₂- with p being an integer of 1 to 4, and -(C₃H₇S)_{q}-C₃H₇- with q being an integer of 1 to 4;
R¹ is hydrogen, C₁-C₄-alkyl or C₁-C₁₂-alkyl interrupted with O or S; and
a monomer (A3) and/or a monomer (A3') is/are present, preferably a monomer (A3).

7. The curable composition according to any one of the preceding claims, wherein the equivalent ratio of the SH groups of the polythiol monomer (A1) to the SH-reactive groups of the monomer (A3) and/or the monomer (A3') is of from 1 : 0.01 to 1 : 0.99, preferably from 1 : 0.1 to 1 : 0.9, wherein one equivalent of an SH-reactive group of monomer (A3') corresponds to 0.5 equivalents of an SH-reactive group of monomer (A3).

8. The curable composition according to any one of the preceding claims, wherein the at least two SH-reactive groups of the monomer (A3) are selected from an epoxy group, an isocyanate group, an ethylenically unsaturated group and any combination thereof, wherein preferably the ethylenically unsaturated group is selected from a vinylene group, a vinylidene group, a vinyl group, an allyl group and any combination thereof.

9. The curable composition according to any one of the preceding claims, wherein at least one monomer (A3) having two SH-reactive groups and at least one monomer (A3) having three SH-reactive groups are present, and wherein preferably the two SH-reactive groups of the monomer (A3) having two SH-reactive groups and the three SH-reactive groups of the monomer (A3) having three SH-reactive groups are an ethylenically unsaturated group, more preferably selected from a vinyl group, an allyl group and any combination thereof.

10. The curable composition according to any one of the preceding claims, wherein the at least two SH-reactive groups of the curing agent (C) are selected from an epoxy group, an isocyanate group, an ethylenically unsaturated group, a halogen group and any combination thereof.

11. The curable composition according to any one of the preceding claims, wherein the at least two SH-reactive groups of the monomer (A3) are selected from a vinyl group, an allyl group, a vinylene group, a vinylidene group and any combination thereof, and
the at least two SH-reactive groups of the curing agent (C) are selected from an epoxy group, an isocyanate group, an ethylenically unsaturated group and any combination thereof.

12. The curable composition according to any one of the preceding claims, wherein the curable composition is a two-component (2K) formulation comprising
(I) a first component containing (i) the polythiol prepolymer (B), and
(II) a second component containing (ii) the curing agent (C) having at least two SH-reactive groups and/or a curing agent (C') having at least one group containing a C≡C bond as an SH-reactive group.

13. An article containing a polythioether polymer (D), selected from the group consisting of a coating, an adhesive, a sealant and a shaped article, wherein the article is obtainable by applying the curable composition, as defined in any one of claims 1 to 12, to a substrate and hardening the curable composition to form the polythioether polymer (D).

14. A polythiol prepolymer (B) having at least two groups of formula 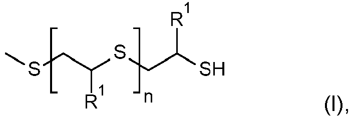 wherein n is 0 to 20, obtainable by a process, the process comprising reacting a polythiol monomer (A1) of formula 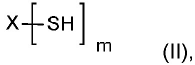 wherein m is 2, 3 or 4 and X is a m-valent linking group, and a compound (A2) of formula 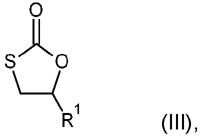 wherein
R¹ is hydrogen, C₁-C₁₈-alkyl or C₁-C₁₈-alkyl substituted with halogen or interrupted with O or S; and
a monomer (A3) having at least two SH-reactive groups, selected from an epoxy group, an isocyanate group, an ethylenically unsaturated group, a halogen group and any combination thereof;
and/or a monomer (A3') having at least one group containing a C≡C bond as an SH-reactive group;
and the reaction sequence is preferably either
(i-1) a first step (i-1a) of reacting a polythiol monomer (A1) of formula (II) and a compound (A2) of formula (III), followed by a second step (i-1b) of reacting with a monomer (A3) and/or a monomer (A3'); or
(i-2) a first step (i-2a) of reacting a polythiol monomer (A1) of formula (II) and a monomer (A3) and/or a monomer (A3'), followed by a second step (i-2b) of reacting with a compound (A2) of formula (III).

15. The use of a compound (A2) of formula 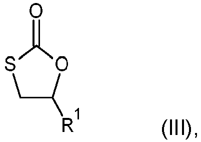 wherein
R¹ is hydrogen, C₁-C₁₈-alkyl or C₁-C₁₈-alkyl substituted with halogen or interrupted with O or S; as a monomer for stabilizing a polythioether polymer (D) towards chemicals, preferably acids, the polythioether polymer (D) is obtainable by a process comprising:
a) preparing a polythiol prepolymer (B) having at least two groups of formula 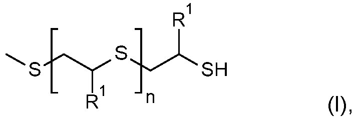 wherein n is 0 to 20, by reacting a polythiol monomer (A1) of formula 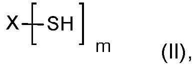 wherein m is 2, 3 or 4 and X is a m-valent linking group, and a compound (A2) of formula 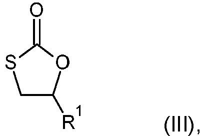 wherein
R¹ is hydrogen, C₁-C₁₈-alkyl or C₁-C₁₈-alkyl substituted with halogen or interrupted with O or S; and
optionally a monomer (A3) having at least two SH-reactive groups, selected from an epoxy group, an isocyanate group, an ethylenically unsaturated group, a halogen group and any combination thereof,
and/or a monomer (A3') having at least one group containing a C≡C bond as an SH-reactive group;
and in case a monomer (A3) and/or a monomer (A3') is/are present, the reaction sequence is either
(i-1) a first step (i-1a) of reacting a polythiol monomer (A1) of formula (II) and a compound (A2) of formula (III), followed by a second step (i-1b) of reacting with a monomer (A3) and/or a monomer (A3'); or
(i-2) a first step (i-2a) of reacting a polythiol monomer (A1) of formula (II) and a monomer (A3) and/or a monomer (A3'), followed by a second step (i-2b) of reacting with a compound (A2) of formula (III);
and
b) hardening the polythiol prepolymer (B) with a curing agent (C) having at least two SH-reactive groups and/or a curing agent (C') having at least one group containing a C≡C bond as an SH-reactive group.
